# EUROPÄISCHE PATENTANMELDUNG

(11) **EP 3 702 303 A1**
(43) Veröffentlichungstag der Anmeldung: **02.09.2020**
(21) Anmeldenummer: 20154235.4
(22) Anmeldetag: 29.01.2020
(51) Int. Cl.: B65H 19/12

(54) **ÜBERGABESYSTEM**

(30) Priorität: 07.02.2019 DE 102019201595
(71) Anmelder: BHS Intralogistics GmbH, 93098 Mintraching (DE)
(72) Erfinder: Ruhland, Karl, 92536 Pfreimd (DE); Huber, Thomas, 93059 Regensburg (DE)
(74) Vertreter: Rau, Schneck & Hübner Patentanwälte Rechtsanwälte PartGmbB

(57) **Zusammenfassung**

Die Erfindung betrifft ein Übergabesystem zum Übergeben eines Guts (11) mit einer Überführungsanordnung (25) zum Übergeben eines Guts (11) zu einem Transportwagen (32) in einem Übergabereich (31) und mit einem Transportwagen (32) zum Aufnehmen des Guts (11) von der Überführungsanordnung (25) in dem Übergabereich (31).

## Beschreibung

Der Inhalt der deutschen Patentanmeldung DE 10 2019 201 595.6 wird durch Bezugnahme hierin aufgenommen.

Die Erfindung betrifft ein Übergabesystem zum Übergeben eines Guts, wie Stückguts, insbesondere einer Materialrolle. Ferner richtet sich die Erfindung auf eine Gesamtanlage mit mindestens einem derartigen Übergabesystem und mit einer Wellpappeanlage. Die Erfindung richtet sich außerdem auf ein Güter-Übergabe-Verfahren zum Übergeben eines Guts, insbesondere einer Materialrolle.

Aus dem Stand der Technik ist es bereits bekannt, Güter, insbesondere Materialrollen, für die weitere Bearbeitung bzw. für den weiteren Transport zu übergeben. Dies geschieht im Allgemeinen händisch.

Der Erfindung liegt die Aufgabe zugrunde, ein Übergabesystem zum Übergeben eines Guts zu schaffen, das besonders langlebig ist. Ferner soll dieses besonders funktionssicher sein. Eine entsprechende Gesamtanlage und ein entsprechendes Güter-Übergabe-Verfahren sollen ebenfalls geschaffen werden.

Diese Aufgabe wird erfindungsgemäß durch die in den Hauptansprüchen 1, 13 und 14 angegebenen Merkmale gelöst. Der Kern der Erfindung liegt in einer, insbesondere automatisierten bzw. fahrerlosen, insbesondere vollständig automatisierten bzw. fahrerlosen, Überführungsanordnung und in einem, insbesondere automatisierten bzw. fahrerlosen, insbesondere vollständig automatisierten bzw. fahrerlosen, Transportwagen, der bei dem Übergabereich das Gut von der Überführungsanordnung empfängt. Die Überführungsanordnung gibt dabei das Gut ab. Sowohl Überführungsanordnung als auch Transportwagen arbeiten vorzugsweise selbständig. Sie sind imstande, das Gut zu transportieren. Das Übergabesystem arbeitet vorzugsweise vollständig automatisiert. Auch die eigentliche Übergabe erfolgt bevorzugt vollständig automatisiert. Personen sind nicht erforderlich.

Alternativ ist die Überführungsanordnung und/oder der Transportwagen manuell bzw. händisch steuerbar.

Weitere vorteilhafte Ausgestaltungen der Erfindung sind in den Unteransprüchen angegeben.

Die Ausgestaltung gemäß dem Unteranspruch 2 verhindert eine mechanische Überlastung und damit Beschädigung des Transportwagens bei der Übergabe des Guts.

Die Anhebevorrichtung gemäß dem Unteranspruch 3 ist günstigerweise in einem Boden bzw. Untergrund angeordnet, sodass sie bei Nichtgebrauch von außen nicht ersichtlich ist. Bei Nichtgebrauch ist günstigerweise eine Oberfläche der Anhebevorrichtung bündig mit dem benachbarten Boden bzw. Untergrund. Die Anhebevorrichtung umfasst beispielsweise mindestens ein Spindel-, Hydraulik und/oder Pneumatiksystem oder dergleichen.

Die Ausgestaltung gemäß dem Unteranspruch 4 führt zu einem besonders guten Schutz des Transportwagens. Eine unsanfte Übergabe des Guts führt so zu keiner Beschädigung an dem Transportwagen. Spitzenlasten sind so verringerbar. Durch eine direkte Krafteinleitung durch die Güteraufnahme in die Anhebevorrichtung bei Aufnahme des Guts bleiben andere Bauteile bzw. Komponenten des Transportwagons im Wesentlichen unbeansprucht. Vorzugsweise ist nur die Güteraufnahme ausreichend stabil bzw. tragfähig ausgeführt, was aus Kostengründen vorteilhaft ist.

Die Kompensations-Federeinheit gemäß dem Unteranspruch 6 ist beispielsweise als mechanische Feder, wie Schraubenfeder oder Tellerfeder, Pneumatikfeder oder Hydraulikfeder ausgeführt.

Die Ausrichtanordnung gemäß dem Unteranspruch 7 erlaubt eine, insbesondere achsparallele, Ausrichtung des Transportwagens vor der Übergabe des Guts nach dem Gut. Insbesondere ist so eine achsparallele Übergabe des Guts an den Transportwagen möglich. Beschädigungen sind so insbesondere an dem Transportwagen und dem Gut vermeidbar. Es ist zweckmäßig, wenn die Ausrichtanordnung das zu übergebende Gut vor der Übergabe vermisst. Günstigerweise wird deren axiale Länge und/oder Breite bzw. Durchmesser gemessen. Der Transportwagen wird dann entsprechend ausgerichtet, wie ausgelenkt bzw. verfahren.

Auch die Ausgestaltung gemäß dem Unteranspruch 8 ermöglicht eine exakte Ausrichtung des Transportwagens nach dem zu überführenden Gut. Die Ausführungen zu dem Unteranspruch 7 gelten hier im Wesentlichen analog. Schrägstellungen des Guts gegenüber dem Transportwagen sind hier sicher erkennbar.

Auch die Übergabestation gemäß dem Unteranspruch 11 erlaubt eine Ausrichtung des Transportwagens vor der Übergabe des Guts nach dem Gut. Beschädigungen sind so insbesondere an dem Transportwagen und dem Gut vermeidbar.

In dem Übergabebereich wird vorzugsweise eine eventuelle Schrägstellung des Gut unmittelbar vor der Übergabe an den Transportwagen detektiert und an die, insbesondere zentrale, Recheneinheit übermittelt. Insbesondere wird der Transportwagen bzw. dessen Güteraufnahme entsprechend einem ermittelten Wert (achs)parallel zum Gut ausgerichtet. Es ist zweckmäßig, wenn die Anhebevorrichtung erst nach erfolgter Ausrichtung aktiviert wird.

Das mindestens eine Schutzelement gemäß dem Unteranspruch 12 ist beispielsweise als Lichtschranke bzw. Lichtgitter ausgeführt. Es verhindert die Gefährdung von Personen. Günstigerweise wird die Überführungsanordnung und/oder der Transportwagen gestoppt, wenn das Schutzelement eine Person in dem Übergabebereich erkennt.

Die Unteransprüche 2 bis 12 bilden auch bevorzugte Weiterbildungen des Güter-Übergabe-Verfahrens gemäß dem Hauptanspruch 14.

Günstigerweise sind die Güter als Materialrollen, insbesondere Papierrollen bzw. Papperollen, ausgeführt und in einer Wellpappeanlage zur Bildung von Wellpappe einsetzbar. Alternativ sind die Güter beispielsweise Paletten oder auf Paletten angeordnet.

Die Güter bzw. Materialrollen können sich voneinander unterscheiden, beispielsweise in Querabmessung bzw. Durchmesser, axialer Erstreckung, Material oder dergleichen. Die Querabmessung bzw. der Durchmesser der Güter bzw. Materialrollen in dem Lager liegt vorzugsweise zwischen 30 cm und 250 cm, bevorzugt zwischen 100 cm und 200 cm. Die axiale Erstreckung liegt günstigerweise zwischen 60 cm und 350 cm.

Es ist zweckmäßig, wenn eine Überführungsanordnung und ein Transportwagen jeweils eine eigene Kommunikationseinrichtung mit einer Empfangseinheit zum Empfangen externer Informationen bzw. Signale, die beispielsweise Fahrt-, Ziel- und/oder Umgebungsinformationen sind, haben.

Günstigerweise haben die Überführungsanordnung und der Transportwagen jeweils mindestens einen eigenen Verfahrantrieb zum, insbesondere direkten oder indirekten, Antreiben von mindestens einer antreibbaren Laufeinheit derselben. Die Überführungsanordnung und der Transportwagen sind vorzugsweise eigenständig ansteuerbar. Sie sind insbesondere selbstfahrend. Die Überführungsanordnung und/oder der Transportwagen fährt vorzugsweise schienenlos.

Es ist zweckmäßig, wenn die Überführungsanordnung und der Transportwagen jeweils eine eigene Energiespeichereinheit umfassen, die beispielsweise als Batterie oder Akkumulator ausgeführt ist. Die Überführungsanordnung und der Transportwagen sind vorzugsweise lenkbar. Sie sind bevorzugt im Stande, geradeaus oder Kurven zu fahren.

Die in den Ansprüchen verwendeten unbestimmten Artikel bilden keine mengenmäßige Beschränkung. Bevorzugt ist beispielsweise eine Vielzahl von Überführungsanordnungen und Transportwagen vorhanden.

Nachfolgend wird unter Bezugnahme auf die beigefügte Zeichnung eine bevorzugte Ausführungsform der Erfindung beispielhaft beschrieben. Dabei zeigen:
- Fig. 1: eine vereinfachte Draufsicht auf eine erfindungsgemäße Gesamtanlage,
- Fig. 2: eine Seitenansicht eines Anliefersystems mit einem Anlieferfahrzeug und einer automatisierten Überführungsanordnung der in Fig. 1 gezeigten Gesamtanlage,
- Fig. 3: eine perspektivische Darstellung des in Fig. 2 gezeigten Anliefersystems,
- Fig. 4: eine Draufsicht auf ein alternatives Anliefersystem, bei dem aktive Sicherheitseinrichtungen der Überführungsanordnung mit dargestellt sind,
- Fig. 5: eine der Fig. 4 ähnelnde Draufsicht auf das in Fig. 2, 3 gezeigte Anliefersystem, bei dem eine Materialrollen-ObjektErkennungsvorrichtung der Überführungsanordnung in aktivem Zustand gezeigt ist,
- Fig. 6: eine detaillierte perspektivische Ansicht einer Überführungsanordnung von schräg unten,
- Fig. 7: eine detaillierte perspektivische Ansicht der in Fig. 6 gezeigten Überführungsanordnung von schräg oben,
- Fig. 8A: einen Querschnitt durch eine Greifvorrichtung der in Fig. 6, 7 veranschaulichten Überführungsanordnung samt zu überführender Materialrolle und Materialrollen-Erfassungsvorrichtung sowie Steuerung,
- Fig. 8B-8D: Fig. 8A entsprechende Ansichten, die eine Positionsberechnung der Greifvorrichtung veranschaulichen,
- Fig. 9: eine vereinfachte Seitenansicht einer Überführungsanordnung gemäß Fig. 7, 8A zur Veranschaulichung einer Hubvorrichtung,

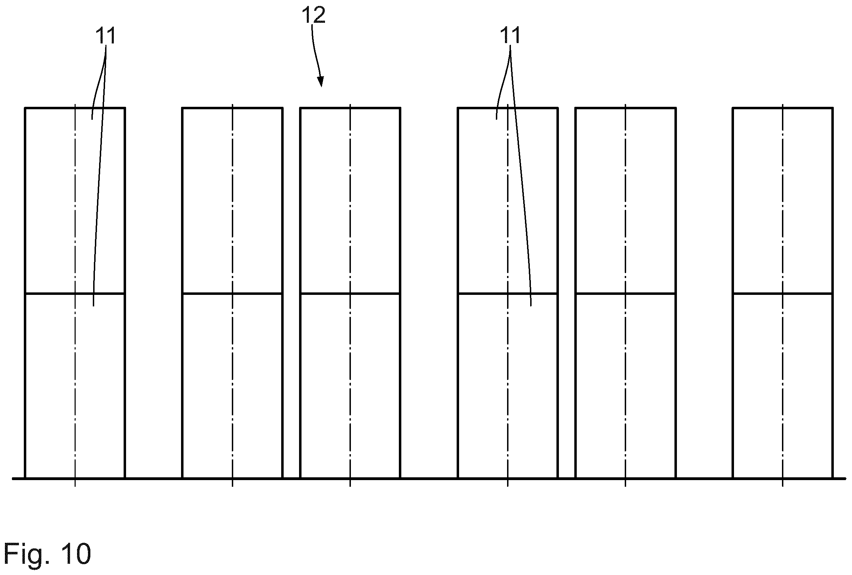

- Fig. 10: eine ein Materialrollenlager der Gesamtanlage gemäß Fig. 1 von vorne zeigende Ansicht,
- Fig. 11: eine Draufsicht auf das in Fig. 10 gezeigte Materialrollenlager,
- Fig. 12: eine perspektivische Ansicht des in Fig. 10, 11 gezeigten Materialrollenlagers,
- Fig. 13: eine Draufsicht auf ein erfindungsgemäßes Übergabesystem zum Übergeben einer Materialrolle an eine Überführungsanordnung der in Fig. 1 gezeigten Gesamtanlage,
- Fig. 14: eine Seitenansicht des in Fig. 13 gezeigten Übergabesystems, und
- Fig. 15: einen Schnitt durch eine aktive Entlastungsvorrichtung des in Fig. 13, 14 gezeigten Übergabesystems.

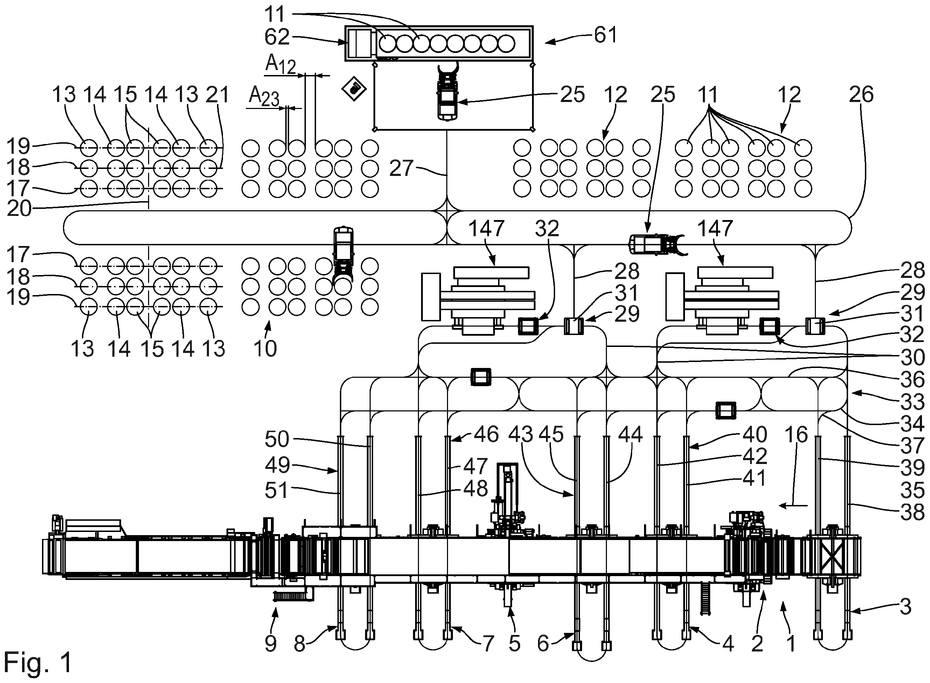

Eine in Fig. 1 gezeigte Gesamtanlage umfasst eine Wellpappeanlage 1, die sich gemäß dieser bevorzugten Ausführungsform im Wesentlichen geradlinig erstreckt.

Die Wellpappeanlage 1 weist eine erste Wellpappe-Herstellvorrichtung 2 zum Herstellen einer einseitig kaschierten ersten Wellpappebahn auf.

Der ersten Wellpappe-Herstellvorrichtung 2 sind eine erste Deckbahn-Spleißvorrichtung 3 und eine erste Zwischenbahn-Spleißvorrichtung 4 vorgeordnet. Die erste Deckbahn-Spleißvorrichtung 3 umfasst zum Abrollen einer endlichen ersten Deckbahn von einer ersten Deckbahnrolle eine erste Abrolleinheit und zum Abrollen einer endlichen zweiten Deckbahn von einer zweiten Deckbahnrolle eine zweite Abrolleinheit. Die endliche erste Deckbahn und zweite Deckbahn werden zum Bereitstellen einer endlosen ersten Deckbahn mittels einer Verbinde- und Schneideinheit der ersten Deckbahn-Spleißvorrichtung 3 miteinander verbunden.

Die erste Zwischenbahn-Spleißvorrichtung 4 ist entsprechend der ersten Deckbahn-Spleißvorrichtung 3 ausgebildet. Diese umfasst zum Abrollen einer endlichen ersten Zwischenbahn von einer ersten Zwischenbahnrolle eine dritte Abrolleinheit und zum Abrollen einer endlichen zweiten Zwischenbahn von einer zweiten Zwischenbahnrolle eine vierte Abrolleinheit. Die endliche erste Zwischenbahn und zweite Zwischenbahn werden zum Bereitstellen einer endlosen ersten Zwischenbahn mittels einer Verbinde- und Schneideinheit der ersten Zwischenbahn-Spleißvorrichtung 4 miteinander verbunden.

Die endlose erste Deckbahn und die endlose erste Zwischenbahn werden der ersten Wellpappe-Herstellvorrichtung 2 zugeführt.

Die erste Wellpappe-Herstellvorrichtung 2 umfasst zum Erzeugen einer eine Wellung aufweisenden, endlosen ersten Wellpappebahn aus der endlosen ersten Zwischenbahn eine erste Riffelwalzenanordnung mit einer ersten Riffelwalze und einer zweiten Riffelwalze. Die Riffelwalzen bilden zum Durchführen und Riffeln der endlosen ersten Zwischenbahn einen ersten Walzenspalt aus.

Zum Verbinden der endlosen ersten Deckbahn mit der endlosen gewellten ersten Zwischenbahn bzw. Wellbahn zu der einseitig kaschierten endlosen ersten Wellpappebahn weist die erste Wellpappe-Herstellvorrichtung 2 eine erste Leimauftragseinrichtung auf, die vorzugsweise eine Leimdosierwalze, einen Leimbehälter und eine Leimauftragswalze umfasst. Zum Durchführen und Beleimen der endlosen ersten Wellbahn bildet die Leimauftragswalze mit der ersten Riffelwalze einen Spalt aus. Der sich in dem Leimbehälter befindende Leim wird über die Leimauftragswalze auf Spitzen der Wellung der endlosen ersten Wellbahn aufgetragen. Die Leimdosierwalze liegt gegen die Leimauftragswalze an und dient zum Ausbilden einer gleichmäßigen Leimschicht auf der Leimauftragswalze.

Die endlose erste Deckbahn wird anschließend mit der mit Leim aus dem Leimbehälter versehenen, endlosen ersten Wellbahn in der ersten Wellpappe-Herstellvorrichtung 2 zum Herstellen der einseitig kaschierten ersten Wellpappebahn zusammengefügt.

Zum Anpressen der endlosen ersten Deckbahn gegen die mit Leim versehene, endlose erste Wellbahn, die wiederum bereichsweise an der ersten Riffelwalze anliegt, hat die erste Wellpappe-Herstellvorrichtung 2 ein erstes Anpressmodul. Das erste Anpressmodul ist günstigerweise als Anpressbandmodul ausgeführt. Es ist oberhalb der ersten Riffelwalze angeordnet. Das erste Anpressmodul hat zwei erste Umlenkwalzen sowie ein endloses erstes Anpressband, das um die beiden ersten Umlenkwalzen geführt ist. Die erste Riffelwalze greift in einen Raum zwischen den beiden ersten Umlenkwalzen des ersten Anpressmoduls bereichsweise von unten ein, wodurch das erste Anpressband durch die erste Riffelwalze umgelenkt wird. Das erste Anpressband drückt gegen die endlose erste Deckbahn, die wiederum gegen die mit Leim versehene, an der ersten Riffelwalze anliegende, endlose erste Wellbahn gepresst wird.

Zum Zwischenspeichern und Puffern der einseitig kaschierten, endlosen ersten Wellpappebahn wird diese über eine erste Hochtransporteinrichtung einer ersten Speichervorrichtung zugeführt, wo diese Schleifen ausbildet.

Ferner hat die Wellpappeanlage 1 eine zweite Wellpappe-Herstellvorrichtung 5, die entsprechend der ersten Wellpappe-Herstellvorrichtung 2 ausgebildet ist.

Der zweiten Wellpappe-Herstellvorrichtung 5 sind eine zweite Deckbahn-Spleißvorrichtung 6 und eine zweite Zwischenbahn-Spleißvorrichtung 7 vorgeordnet, die entsprechend der ersten Deckbahn-Spleißvorrichtung 3 bzw. der ersten Zwischenbahn-Spleißvorrichtung 4 ausgebildet sind.

Die zweite Deckbahn-Spleißvorrichtung 6 umfasst zum Abrollen einer endlichen dritten Deckbahn von einer dritten Deckbahnrolle eine fünfte Abrolleinheit und zum Abrollen einer endlichen vierten Deckbahn von einer vierten Deckbahnrolle eine sechste Abrolleinheit. Die endliche dritte Deckbahn und die vierte Deckbahn werden zum Bereitstellen einer endlosen zweiten Deckbahn mittels einer Verbinde- und Schneideinheit der zweiten Deckbahn- Spleißvorrichtung 6 miteinander verbunden.

Die zweite Zwischenbahn-Spleißvorrichtung 7 umfasst zum Abrollen einer endlichen dritten Zwischenbahn von einer dritten Zwischenbahnrolle eine siebte Abrolleinheit und zum Abrollen einer endlichen vierten Zwischenbahn von einer vierten Zwischenbahnrolle eine achte Abrolleinheit. Die endliche dritte Zwischenbahn und vierte Zwischenbahn werden zum Bereitstellen einer endlosen zweiten Zwischenbahn mittels einer Verbinde- und Schneideinheit der zweiten Zwischenbahn-Spleißvorrichtung 7 miteinander verbunden.

Die zweite Wellpappe-Herstellvorrichtung 5 ist im Stande, eine einseitig kaschierte, endlose, zweite Wellpappebahn aus der endlosen zweiten Deckbahn und Zwischenbahn zu erzeugen.

Die einseitig kaschierte, zweite Wellpappebahn wird einer zweiten Speichervorrichtung zugeführt, wo diese Schleifen ausbildet.

Die Wellpappeanlage 1 hat außerdem eine Kaschierbahn-Spleißvorrichtung 8, die zum Abrollen einer endlichen ersten Kaschierbahn von einer ersten Kaschierbahnrolle eine neunte Abrolleinheit und zum Abrollen einer endlichen zweiten Kaschierbahn von einer zweiten Kaschierbahnrolle eine zehnte Abrolleinheit umfasst. Die endliche erste Kaschierbahn und die endliche zweite Kaschierbahn werden zum Bereitstellen einer endlosen Kaschierbahn mittels einer Verbinde- und Schneideinheit der Kaschierbahn-Spleißvorrichtung 8 miteinander verbunden.

Stromabwärts zu den Speichervorrichtungen und der Kaschierbahn-Spließvorrichtung 8 hat die Wellpappeanlage 1 eine Vorheizvorrichtung (nicht dargestellt), die drei übereinander angeordnete Vorheizwalzen umfasst. Den Vorheizwalzen werden die einseitig kaschierten, endlosen Wellpappebahnen und die endlose Kaschierbahn zugeführt.

Stromabwärts zu der Vorheizvorrichtung hat die Wellpappanlage 1 ein Leimwerk (nicht dargestellt) mit Beleimungswalzen, die teilweise in ein jeweiliges Leimbad eingetaucht sind. An jeder Beleimungswalze liegt eine Leimdosierwalze an, um eine gleichmäßige Leimschicht auf der benachbarten Beleimungswalze auszubilden. Die einseitig kaschierte, erste Wellpappebahn befindet sich mit ihrer Wellbahn mit einer ersten Beleimungswalze in Kontakt, sodass die Wellung dieser Wellbahn mit Leim aus dem Leimbad versehen wird. Die einseitig kaschierte, zweite Wellpappebahn befindet sich mit ihrer Wellbahn mit einer zweiten Beleimungswalze in Kontakt, sodass die Wellung dieser Wellbahn mit Leim aus dem zugehörigen Leimbad versehen wird.

Stromabwärts zu dem Leimwerk hat die Wellpappeanlage 1 eine Verbindungsvorrichtung 9, die als Heiz-Andrückvorrichtung ausgebildet ist und einen horizontal verlaufenden Heiztisch umfasst. Benachbart zu dem Heiztisch ist ein um Führungswalzen geführter, endloser Andrückgurt angeordnet. Zwischen dem Andrückgurt und dem Heiztisch ist ein Andrückspalt ausgebildet, durch den die einseitig kaschierten Wellpappebahnen und die endlose Kaschierbahn unter Bildung einer endlosen, hier fünflagigen, Wellpappebahn geführt sind.

Stromabwärts zu der Verbindungsvorrichtung 9 hat die Wellpappeanlage 1 eine Kurz-Querschneidevorrichtung (nicht dargestellt).

Stromabwärts zu der Kurz-Querschneidevorrichtung umfasst die Wellpappeanlage 1 eine Längsschneide-/Rillvorrichtung (nicht dargestellt). Stromabwärts zu der Längsschneide-/Rillvorrichtung hat die Wellpappeanlage 1 eine Querschneidevorrichtung (nicht dargestellt), um aus der endlosen Wellpappebahn bzw. aus Teilbahnen derselben Bögen zu erzeugen.

Der Querschneidevorrichtung ist eine Förderbandeinrichtung (nicht dargestellt) nachgeordnet, um die Bögen weiter zu fördern. Der Förderbandeinrichtung ist eine Ablagevorrichtung (nicht dargestellt) nachgeordnet, um Bögen-Stapel zu bilden.

Beabstandet zu der Wellpappeanlage 1 hat die Gesamtanlage ein Materialrollenlager 10, in dem sich eine Vielzahl von Materialrollen 11 befindet. Die Materialrollen 11 sind in den Spleißvorrichtungen 3, 4, 6, 7, 8 einsetzbar. Sie sind in dem Materialrollenlager 10 zu Gruppen 12 zusammengefasst, die beabstandet zueinander angeordnet sind. Die Materialrollen 11 sind in den einzelnen Gruppen 12 beispielsweise identisch angeordnet.

Die Materialrollen 11 sind stehend in dem Materialrollenlager 10 angeordnet. Sie stützen sich dabei stirnseitig gegenüber einem Untergrund bzw. Boden ab, der beispielsweise ein Hallenboden ist und auch die Wellpappeanlage 1 trägt.

Jede Gruppe 12 hat eine erste Reihe 13 mit Materialrollen 11. Benachbart zu der ersten Reihe 13 erstreckt sich in jeder Gruppe 12 eine zweite Reihe 14 mit Materialrollen 11. Benachbart zu der zweiten Reihe 14 erstreckt sich in jeder Gruppe 12 eine dritte Reihe 15 mit Materialrollen 11. In jeder Reihe 13, 14, 15 befinden sich bei vollständig bestücktem Materialrollenlager 10 vorzugsweise gleich viele Materialrollen 11.

Bei dieser bevorzugten, gezeigten Ausführungsform sind pro Reihe 13, 14, 15 drei Materialrollen 11 vorhanden. Eine andere Anzahl von Materialrollen 11 pro Reihe 13, 14, 15 ist alternativ möglich. Alternativ unterscheidet sich die Anzahl der Materialrollen 11 pro Reihe 13, 14, 15.

Die Reihen 13, 14, 15 mit Materialrollen 11 verlaufen parallel zueinander. Sie erstrecken sich senkrecht zu einer Längs- bzw. Förderrichtung 16 der Wellpappeanlage 1. In jeder Reihe 13, 14, 15 befinden sich somit Mittel- bzw. Längsachsen der dort angeordneten Materialrollen 11 in einer gemeinsamen vertikalen Längsebene. Die vertikalen Längsebenen der Reihen 13, 14, 15 verlaufen parallel zueinander und erstrecken sich senkrecht zu der Wellpappeanlage 1.

Die in den unterschiedlichen Reihen 13, 14, 15 angeordneten Materialrollen 11 befinden sich in unterschiedlichen vertikalen, parallel zueinander verlaufenden Querebenen 17, 18, 19, die die einzelnen Mittel- bzw. Längsachsen der in der jeweiligen Reihe 13, 14, 15 bzw. angeordneten Materialrollen 11 einschließen und senkrecht zu den Längsebenen verlaufen.

Der horizontale Abstand der in einer Reihe 13, 14, 15 angeordneten Materialrollen 11 zueinander ist identisch. Alternativ berühren sich die in einer Reihe 13, 14, 15 angeordneten Materialien 11.

Die in der ersten Reihe 13 angeordneten Materialrollen 11 haben zu den in der benachbarten zweiten Reihe 14 angeordneten Materialrollen 11 einen ersten minimalen Abstand A₁₂ zwischen maximalen Durchmesserbereichen benachbart zueinander angeordneter Materialrollen 11. Der minimale Abstand A₁₂ liegt somit zwischen Außenseiten bzw. Umfangsbereichen von Materialrollen 11 in der ersten und zweiten Reihe 13, 14 vor. Eine erste Begrenzungslinie des minimalen Abstands A₁₂ ist durch eine erste Tangente der in der ersten Reihe 13 angeordneten Materialrollen 11 gebildet. Eine zweite Begrenzungslinie des minimalen Abstands A₁₂ ist durch eine zweite Tangente der in der zweiten Reihe 14 angeordneten Materialrollen 11 gebildet.

Die in der zweiten Reihe 14 angeordneten Materialrollen 11 haben zu den in der benachbarten dritten Reihe 15 angeordneten Materialrollen 11 einen zweiten minimalen Abstand A₂₃ zwischen maximalen Durchmesserbereichen benachbart zueinander angeordneter Materialrollen 11. Der minimale Abstand A₂₃ liegt somit zwischen Außenseiten bzw. Umfangsbereichen von Materialrollen 11 in der zweiten und dritten Reihe 14, 15 vor. Eine erste Begrenzungslinie des minimalen Abstands A₂₃ ist durch eine erste Tangente der in der zweiten Reihe 14 angeordneten Materialrollen 11 gebildet. Eine zweite Begrenzungslinie des minimalen Abstands A₂₃ ist durch eine zweite Tangente der in der dritten Reihe 15 angeordneten Materialrollen 11 gebildet.

Die minimalen Abstände A₁₂ und A₂₃ unterscheiden sich deutlich voneinander. Der minimale Abstand A₁₂ ist wesentlich größer als der minimale Abstand A₂₃. Der minimale Abstand A₁₂ beträgt gemäß dieser Ausführungsform 87,5 cm. Er liegt vorzugsweise zwischen 50 cm und 90 cm und ermöglicht insbesondere einer Person eine Flucht. Der minimale Abstand A₂₃ liegt vorzugsweise zwischen 0 cm und 30 cm. Er ist günstigerweise so klein wie möglich, also 0 cm, um die Fläche des Materialrollenlagers 10 optimal zu nutzen. Der minimale Abstand A₂₃ ist also insbesondere abhängig von einer geometrischen Ausführung einer Überführungsanordnung zum Überführen der Materialrollen 11, deren Greifvorrichtung bzw. deren ersten Greifarmeinrichtung und/oder zweiten Greifarmeinrichtung. Die Greifvorrichtung muss insbesondere imstande sein, die Materialrolle/n 11 sicher aufzunehmen. Beispielsweise ist eine Breite eines Rahmens der Überführungsanordnung (Überstand) zu berücksichtigen, damit die zu greifende/n Materialrolle/n 11 sicher erreichbar ist/sind.

Die Materialrollen 11 von jeder Gruppe 12 sind bezüglich einer ersten Symmetrieebene 20 symmetrisch angeordnet, die sich parallel zu den Reihen 13, 14, 15 erstreckt. Sie erstreckt sich zwischen zwei dritten Reihen 15, die dort benachbart zueinander angeordnet sind.

Ferner sind die Materialrollen 11 von jeder Gruppe 12 symmetrisch zu einer zweiten Symmetrieebene 21 angeordnet, die sich senkrecht zu der ersten Symmetrieebene 20 in der mittleren Querebene 18 erstreckt.

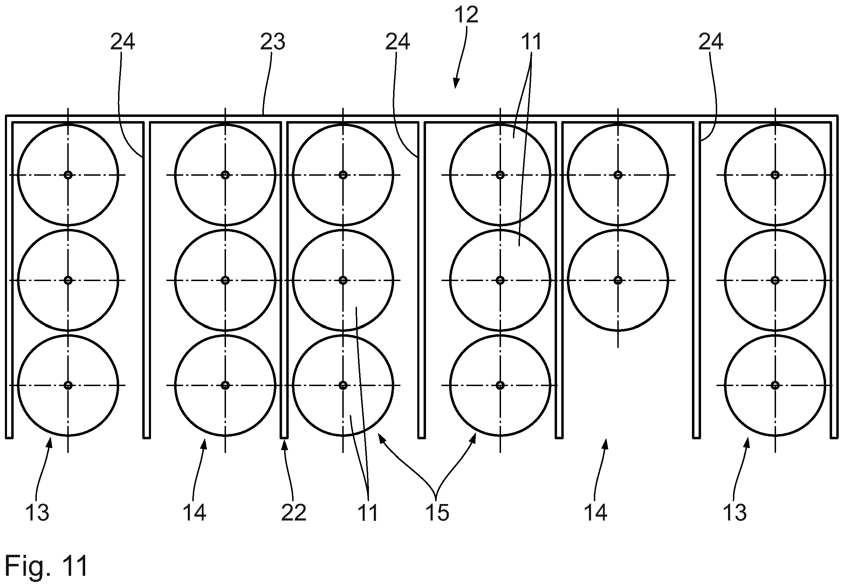

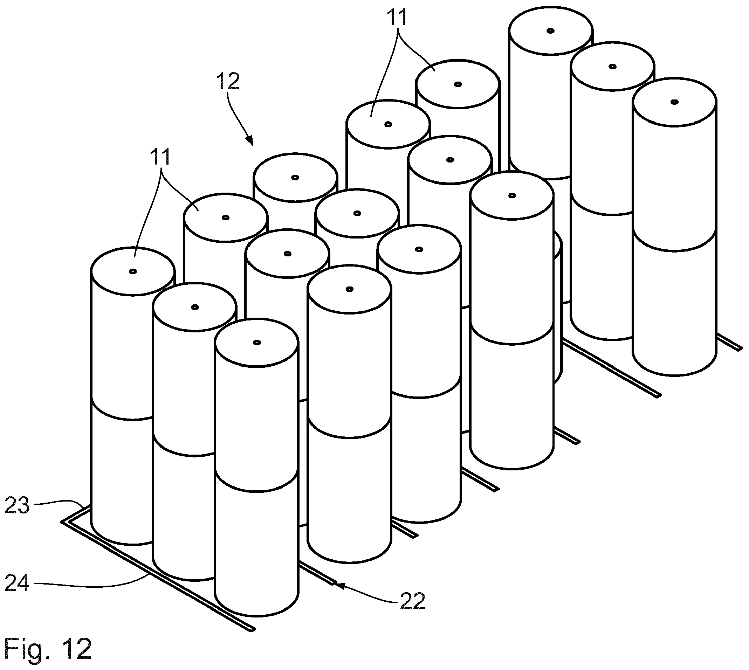

Wie Fig. 11, 12 zeigen, ist jede Reihe 13, 14, 15 innerhalb einer bodenseitigen Markierung 22 angeordnet, die eine Markierungs-Basis 23 und von der Markierungs-Basis 23 vorspringende Markierungs-Unterteilungsschenkel 24 hat. Die Markierungs-Basen 23 fluchten miteinander. Die Markierungs-Unterteilungsschenkel 24 verlaufen parallel zueinander und senkrecht zu der Markierungs-Basis 23. Sie haben eine identische Länge ausgehend von der Markierungs-Basis 23.

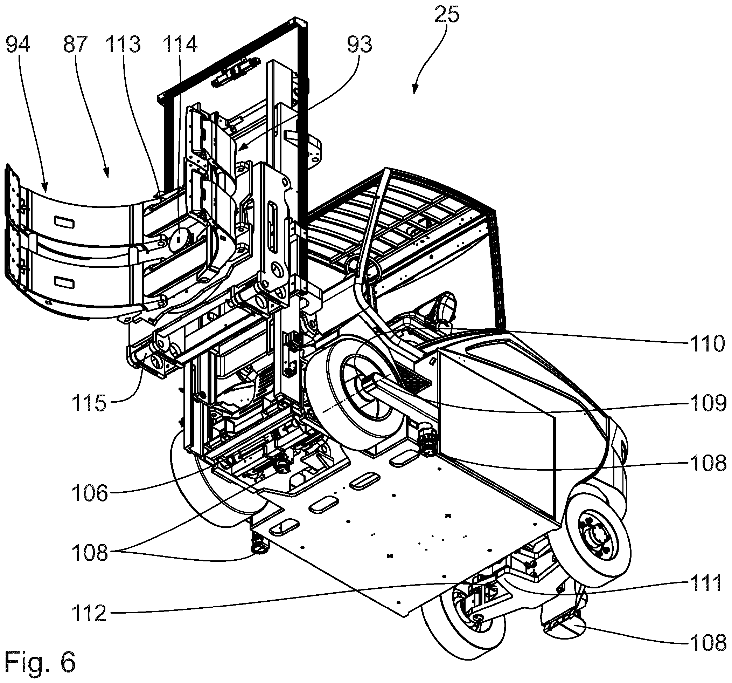

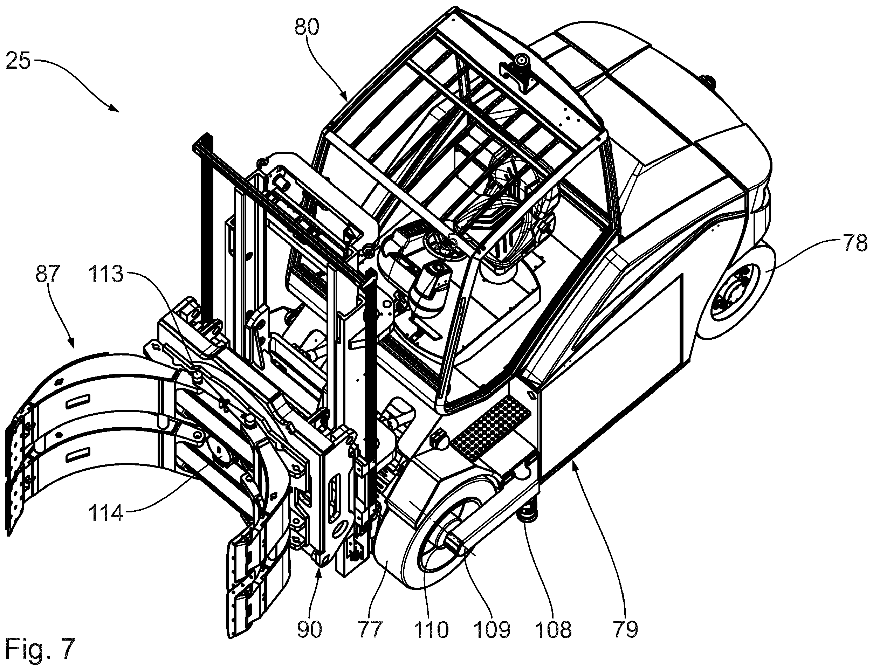

Die Materialrollen 11 sind über automatisierte bzw. fahrerlose Überführungsanordnungen 25 aus dem Materialrollenlager 10 entfernbar (siehe beispielsweise Fig. 6 bis 9).

Wie Fig. 1 zeigt, ist ein geschlossener Überführungsanordnungs-Umlaufweg 26 vorhanden, der sich entlang der einander gegenüberliegenden ersten Querebenen 17 der jeweiligen Gruppen 12 erstreckt. Der Überführungsanordnungs-Umlaufweg 26 umfasst zwei nebeneinander angeordnete, endlose Teil-Umlaufwege. Er ist an einen Überführungsanordnungs-Hauptweg 27 angeschlossen, der sich senkrecht zu der Längs- bzw. Förderrichtung 16 der Wellpappeanlage 1 zwischen einzelnen Gruppen 12 erstreckt und zwischen den Teil-Umlaufwegen verläuft. Alternativ ist anstelle eines Überführungsanordnungs-Umlaufwegs 26 ein Überführungsanordnungs-Weg 26 vorhanden, der in gegensinnigen Richtungen befahrbar ist.

An den Überführungsanordnungs-Umlaufweg 26 schließen sich an einer der Wellpappeanlage 1 zugewandten Seite zwei Überführungsanordnungs-Querwege 28 an, an die sich senkrecht zu der Längs- bzw. Förderrichtung 16 der Wellpappeanlage 1 erstrecken. Jeder Überführungsanordnungs-Querweg 28 steht mit einem Übergabesystem 29 in Verbindung (Fig. 1).

Der Überführungsanordnungs-Umlaufweg 26 und Überführungsanordnungs-Hauptweg 27 sowie die Überführungsanordnungs-Querwege 28 sind vorzugsweise rein theoretisch und werden bevorzugt über Navigation von Software ermittelt. Im Falle von Hindernissen oder Gegenverkehr wird von den Wegen 26, 27, 28 abgewichen.

Die Übergabesysteme 29 sind identisch ausgeführt. Jedes Übergabesystem 29 hat einen Übergabebereich 31, in dem eine von einer Überführungsanordnung 25 überführte Materialrolle 11 an einen Transportwagen 32 zum weiteren Transport der Materialrolle 11 zu der Wellpappeanlage 1 übergebbar ist (Fig. 1).

In Fig. 1 sind auch Transportwagen-Verfahrwegmarkierungen 33 mit dargestellt, die die Verfahrwege der Transportwagen 32 in der Wellpappeanlage 1 bzw. benachbart zu dieser anzeigen und vorgeben. Die Transportwagen-Verfahrwegmarkierungen 33 sind bevorzugt sichtbar und als Anstrich auf den die Wellpappeanlage 1 tragenden ebenen Untergrund aufgebracht. Sie sind von den Transportwagen 32 erkennbar. Die Transportwagen 32 folgen im Normalbetrieb beim Fahren den Transportwagen-Verfahrwegmarkierungen 33, die Kurven, Weichen, Kreuzungen und gerade Abschnitte umfassen.

Mit jedem Übergabesysteme 29 steht außerdem ein Zuteilweg 30 in Verbindung.

Jeder Zuteilweg 30 führt zu einer Materialrollen-Vorbereitungsanordnung 147 zum Vorbereiten der Materialrollen 11 für die weitere Be-/Verarbeitung. Das Vorbereiten der jeweiligen Materialrolle 11 umfasst beispielsweise ein Auspacken bzw. Freilegen derselben, Entfernen bzw. Zerstören von mindestens einer einen freien Materialbahnabschnitt fixierenden Fixierung zum Verhindern eines Abwickelns von der Materialrolle 11, Entfernen von mindestens einem Umreifungselement, Entfernen eines beschädigten Materialbahnabschnitts von der Materialrolle 11, Erzeugen einer definierten Endkontur bzw. Kante für die weitere Verarbeitung an der Materialbahn, Anbringen von mindestens einem (Spleiß)Klebestück an der Materialbahn und/oder Fixieren von einem endseitigen Materialbahnabschnitt an der Materialrolle 11.

Jede Materialrollen-Vorbereitungsanordnung 147 umfasst eine Aufnahmevorrichtung zur Aufnahme einer vorzubereitenden Materialrolle 11 mit einer aufgewickelten Materialbahn. Die Aufnahmevorrichtung hat eine Dreheinrichtung zum Drehantreiben bzw. Schwenken der aufgenommenen Materialrolle 11 um deren Mittelachse bzw. in deren Umfangsrichtung. Jede Materialrollen-Vorbereitungsanordnung 147 weist außerdem mindestens eine, bevorzugt mehrere, Materialrollen-Vorbereitungseinrichtungen zur Vorbereitung der aufgenommenen Materialrolle 11 für die weitere Be-/Verarbeitung auf.

Jeder Zuteilweg 30 steht über die jeweilige Materialrollen-Vorbereitungsanordnung 147 und einem Bypass mit einem Verteilweg 34 in Verbindung, der als Kreislauf ausgeführt ist. Der Verteilweg 34 erstreckt sich zwischen der Wellpappeanlage 1 und dem Materialrollenlager 11. Er erstreckt sich parallel zu der Wellpappeanlage 1.

An den Verteilweg 34 schließt sich ein erster Deckbahnweg 35 an. Der erste Deckbahnweg 35 schließt sich an einen ersten Verteilwegabschnitt 36 und einen zweiten Verteilwegabschnitt 37 des Verteilwegs 34 an. Der erste Deckbahnweg 35 ist quasi endlos und umfasst einen ersten Deckbahnwegabschnitt 38 und einen zweiten Deckbahnwegabschnitt 39. Die Deckbahnwegabschnitte 38, 39 erstrecken sich parallel zueinander und fluchten mit den Abrolleinheiten der ersten Deckbahn-Spleißvorrichtung 3. Die Deckbahnwegabschnitte 38, 39 durchsetzen die Wellpappeanlage 1 bei einer jeweiligen Abrolleinheit und sind jenseits der Wellpappeanlage 1 miteinander verbunden.

Die Transportwagen 32 sind sowohl auf dem ersten Deckbahnwegabschnitt 38 als auch auf dem zweiten Deckbahnwegabschnitt 39 in gegensinnigen Richtungen zur Bestückung der ersten Deckbahn-Spleißvorrichtung 3 und Entfernung von Rest-Materialrollen verfahrbar. Ein umlaufender Transport der Transportwagen 32 in einer Richtung zur Bestückung der ersten Deckbahn-Spleißvorrichtung 3 und Entfernung einer Rest-Materialrolle entlang des ersten Deckbahnwegs 35 ist auch möglich.

An den Verteilweg 34 schließt sich ein erster Zwischenbahnweg 40 an. An den ersten Verteilwegabschnitt 36 und zweiten Verteilwegabschnitt 37 schließt sich der erste Zwischenbahnweg 40 an, der quasi endlos ist und einen ersten Zwischenbahnwegabschnitt 41 und einen ersten Zwischenbahnwegabschnitt 42 umfasst. Die Zwischenbahnwegabschnitte 41, 42 erstrecken sich parallel zueinander und zu den Deckbahnwegabschnitten 38, 39. Sie fluchten mit den Abrolleinheiten der ersten Zwischenbahn-Spleißvorrichtung 4. Der erste und Zwischenbahnwegabschnitt 41, 42 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Zwischenbahnwegabschnitt 41 als auch auf dem zweiten Zwischenbahnwegabschnitt 42 in gegensinnigen Richtungen zur Bestückung der ersten Zwischenbahn-Spleißvorrichtung 4 und Entfernung von Rest-Materialrollen verfahrbar. Ein umlaufender Transport der Transportwagen 32 in einer Richtung zur Bestückung der ersten Zwischenbahn-Spleißvorrichtung 4 und Entfernung einer Rest-Materialrolle entlang des ersten Zwischenbahnwegs 40 ist auch möglich.

An den Verteilweg 34 schließt sich ein zweiter Deckbahnweg 43 an. An den ersten Verteilwegabschnitt 36 und den zweiten Verteilwegabschnitt 37 schließt sich der zweite Deckbahnweg 43 an, der quasi endlos ist und einen ersten Deckbahnwegabschnitt 44 und eine zweiten Deckbahnwegabschnitt 45 umfasst. Die Deckbahnwegabschnitte 44, 45 erstrecken sich parallel zueinander und zu den Deckbahnwegabschnitten 38, 39. Sie fluchten mit den Abrolleinheiten der zweiten Deckbahn-Spleißvorrichtung 6. Der erste und zweite Deckbahnwegabschnitt 44, 45 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Deckbahnwegabschnitt 44 als auch auf dem zweiten Deckbahnabschnitt 45 in gegensinnigen Richtungen zur Bestückung der zweiten Deckbahn-Spleißvorrichtung 6 und Entfernung von Rest-Materialrollen verfahrbar. Ein umlaufender Transport der Transportwagen 32 in einer Richtung zur Bestückung der zweiten Deckbahn-Spleißvorrichtung 6 und Entfernung einer Rest-Materialrolle entlang des zweiten Deckbahnwegs 43 ist auch möglich.

An den Verteilweg 34 schließt sich ein zweiter Zwischenbahnweg 46 an. An den ersten Verteilwegabschnitt 36 und zweiten Verteilwegabschnitt 37 schließt sich der zweite Zwischenbahnweg 46 an, der quasi endlos ist und einen ersten Zwischenbahnwegabschnitt 47 und einen zweiten Zwischenbahnwegabschnitt 48 umfasst. Die Zwischenbahnwegabschnitte 47, 48 erstrecken sich parallel zueinander und zu den Deckbahnwegabschnitten 38, 39. Sie fluchten mit den Abrolleinheiten der zweiten Zwischenbahn-Spleißvorrichtung 7. Der erste und zweite Zwischenbahnwegabschnitt 47, 48 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Zwischenbahnwegabschnitt 47 als auch auf dem zweiten Zwischenbahnwegabschnitt 48 in gegensinnigen Richtungen zur Bestückung der zweiten Zwischenbahn-Spleißvorrichtung 7 und Entfernung von Rest-Materialrollen verfahrbar. Ein umlaufender Transport der Transportwagen 32 in einer Richtung zur Bestückung der zweiten Zwischenbahn-Spleißvorrichtung 7 und Entfernung einer Rest-Materialrolle entlang des zweiten Zwischenbahnwegs 45 ist auch möglich.

An den Verteilweg 34 schließt sich ein Kaschierbahnweg 49 an. An den ersten Verteilwegabschnitt 36 und zweiten Verteilwegabschnitt 37 schließt sich der Kaschierbahnweg 49 an, der quasi endlos ist und einen ersten Kaschierbahnwegabschnitt 50 und einen zweiten Kaschierbahnwegabschnitt 51 umfasst. Die Kaschierbahnwegabschnitte 50, 51 erstrecken sich parallel zueinander und zu den Deckbahnwegabschnitten 38, 39. Sie fluchten mit den Abrolleinheiten der Kaschierbahn-Spleißvorrichtung 8. Der erste und zweite Kaschierbahnwegabschnitt 50, 51 durchsetzen die Wellpappeanlage 1 bei der jeweiligen Abrolleinheit und sind jenseits der Wellpappeanlage 1 miteinander verbunden.

Die Transportwagen 32 sind sowohl auf dem ersten Kaschierbahnwegabschnitt 50 als auch auf dem zweiten Kaschierbahnwegabschnitt 51 in gegensinnigen Richtungen zur Bestückung der Kaschierbahn-Spleißvorrichtung 8 und Entfernung von Rest-Materialrollen verfahrbar. Ein umlaufender Transport der Transportwagen 32 in einer Richtung zur Bestückung der Kaschierbahn-Spleißvorrichtung 8 und Entfernung einer Rest-Materialrolle entlang des Kaschierbahnwegs 49 ist auch möglich.

Die Deckbahnwege 35, 43, die Zwischenbahnwege 40, 16 und der Kaschierbahnweg 49 sind beabstandet zueinander an den Verteilweg 34 angeschlossen und verlaufen beabstandet zueinander.

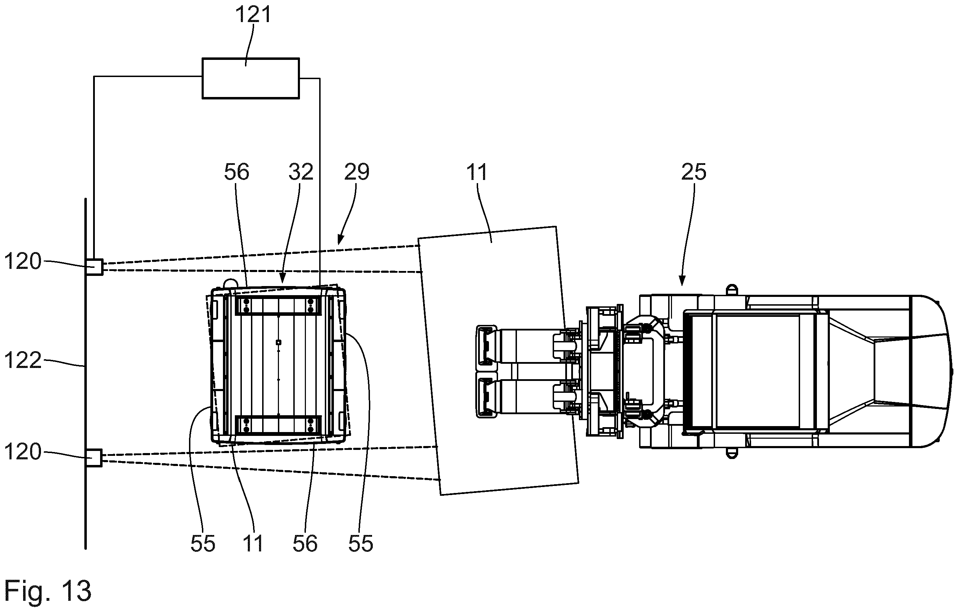

Die Transportwagen 32 sind identisch ausgeführt. Jeder Transportwagen 32 hat ein starres Gestell 52, das rahmenartig bzw. chassisartig ist (beispielsweise Fig. 13 bis 15). Das Gestell 52 trägt eine Materialrollenaufnahme 53 für eine liegende Materialrolle 11 und mehrere Radeinheiten 54 zum Verfahren des Transportwagens 32 auf dem Untergrund sowie eine Kommunikationseinrichtung (nicht dargestellt).

In Abhängigkeit von über die Kommunikationseinrichtung empfangener Signale bzw. Informationen ist der Transportwagen 32 in Bewegung versetzbar. Den Transportwagen 32 sind entsprechend auch Weg- bzw. Zielinformationen übermittelbar. Der Transportwagen 32 ist gerade oder kurvenförmig verfahrbar.

Das Gestell 52 hat zwei Längsseiten 55 und zwei Querseiten 56. Die Längsseiten 55 verlaufen parallel zueinander. Sie erstrecken sich parallel zu der Materialrollenaufnahme 53. Auch die Querseiten 56 erstrecken sich parallel zueinander. Die Längsseiten 55 und die Querseiten 56 sind rechtwinklig zueinander orientiert.

An dem Gestell 52 ist ein eigenständiger Verfahrantrieb (nicht dargestellt) angeordnet, der einen Elektromotor umfasst.

Mit jedem Verfahrantrieb steht ein Antriebslaufrad (nicht dargestellt) in Antriebsverbindung, das drehbar bzw. drehantreibbar gelagert ist. Die Drehachsen der Antriebslaufräder fluchten miteinander. Sie erstrecken sich senkrecht zu den Längsseiten 55. Die Antriebslaufräder befinden sich im Bezug auf eine Längsrichtung des Transportwagens 32 in der Mitte. Sie sind unlenkbar und beim Verfahren des Transportwagens 32 gegenüber dem Untergrund abgestützt.

Ferner ist an jedem Eckbereich des Gestells 52 eine Lenkradeinheit 57 angeordnet, die jeweils ein Zwillingsrad umfasst. Die Zwillingsräder sind drehbar gelagert. Jede Lenkradeinheit 57 ist um eine vertikale Lenkachse 58 selbstständig auslenkbar. Die Lenkradeinheiten 57 sind frei auslenkbar, insbesondere um 360°. Die Lenkachsen 58 verlaufen parallel zueinander.

Die Materialrollenaufnahme 53 ist durch mindestens ein Rinnenteil 59 gebildet, das jeweils auf dem Gestell 52 vertikal verlagerbar gelagert ist und nach oben offen ist. Das mindestens eine Rinnenteil 59 erstreckt sich benachbart zu den Querseiten 56 zwischen den Längsseiten 55. Seine tiefste Aufnahmestelle befindet sich mittig zwischen den Längsseiten 55. Es ist symmetrisch ausgebildet. Das mindestens eine Rinnenteil 59 hat benachbart zu den Längsseiten 55 seine höchste Stelle. Es ist benachbart zu den Querseiten 56 des Gestells 52 bzw. in Längsrichtung offen.

Die Materialrollenaufnahme 53 trägt unten mindestens eine horizontal verlaufende Abstützplatte 60.

An dem Gestell 52 ist außerdem ein Akkumulator (nicht dargestellt) angeordnet. Bei dem Akkumulator handelt es sich um einen wieder aufladbaren Speicher für elektrische Energie für die Verfahrantriebe.

An dem Gestell 52 ist des Weiteren eine Transportwagen-Steuerung (nicht dargestellt) angeordnet, die im Stande ist, die beiden Verfahrantriebe unabhängig voneinander anzusteuern. Die Transportwagen-Steuerung steht außerdem mit der Kommunikationseinrichtung in Signalverbindung.

Die elektronischen bzw. elektrischen Komponenten des Transportwagens 32 sind in geeigneter Weise elektrisch miteinander verbunden.

An dem Gestell 52 ist des Weiteren in einem vorderen Bereich eine Sicherheitseinrichtung (nicht dargestellt) angeordnet, die als Scanner, insbesondere Laserscanner, ausgeführt ist. Die Sicherheitseinrichtung steht mit der Transportwagen-Steuerung in Signalverbindung. Sie ist im Stande, den Transportwagen 32 bei erkannter Gefahr sofort zu stoppen.

Benachbart zu der beim Verfahren vorderen Querseite 56 des Transportwagens 32 ist an dem Gestell 52 vorne eine Verfahrweg-Erkennungseinrichtung (nicht dargestellt) angeordnet, die als Sensor ausgeführt ist. Die Verfahrweg-Erkennungseinrichtung ist länglich ausgebildet und erstreckt sich horizontal. Sie verläuft senkrecht zu der Längsrichtung des Transportwagens 32. Sie ist im Stande, einen vorgegebenen Verfahrweg zu erkennen und steht mit der Transportwagen-Steuerung in Signalverbindung. Dem Transportwagen 32 ist alternativ über Software ein Verfahrweg bzw. Ziel vorgebbar.

Ferner hat der Transportwagen 32 einen Materialrollen-Erkennungssensor (nicht dargestellt). Der Materialrollen-Erkennungssensor ist im Stande zu erkennen, ob der Transportwagen 32 beladen oder unbeladen ist. Der Materialrollen-Erkennungssensor befindet sich in der Materialrollenaufnahme 53 und steht mit der Transportwagen-Steuerung in Signalverbindung.

Der Transportwagen 32 ist durch Bestromung des mindestens einen Verfahrantriebs verfahrbar. Die notwendige elektrische Energie stammt aus dem Akkumulator. Die Verfahrantriebe empfangen indirekt entsprechende Fahrsignale über die Verfahrweg-Erkennungseinrichtung und/oder über die Kommunikationseinrichtung.

Wenn die beiden Antriebslaufräder gegensinnig betragsgleich angetrieben werden, dreht sich der Transportwagen 32 auf der Stelle. Wenn das eine Antriebslaufrad stärker als das andere Antriebslaufrad angetrieben wird, so macht der Transportwagen 32 eine Kurvenfahrt. Die Lenkradeinheiten 57 verstellen sich dabei automatisch um die jeweilige Lenkachse 58. Wenn die beiden Antriebslaufräder identisch und gleichsinnig angetrieben werden, so fährt der Transportwagen 32 gerade. Die Lenkradeinheiten 57 stellen sich automatisch entsprechend auf eine Geradeaus-Fahrt ein.

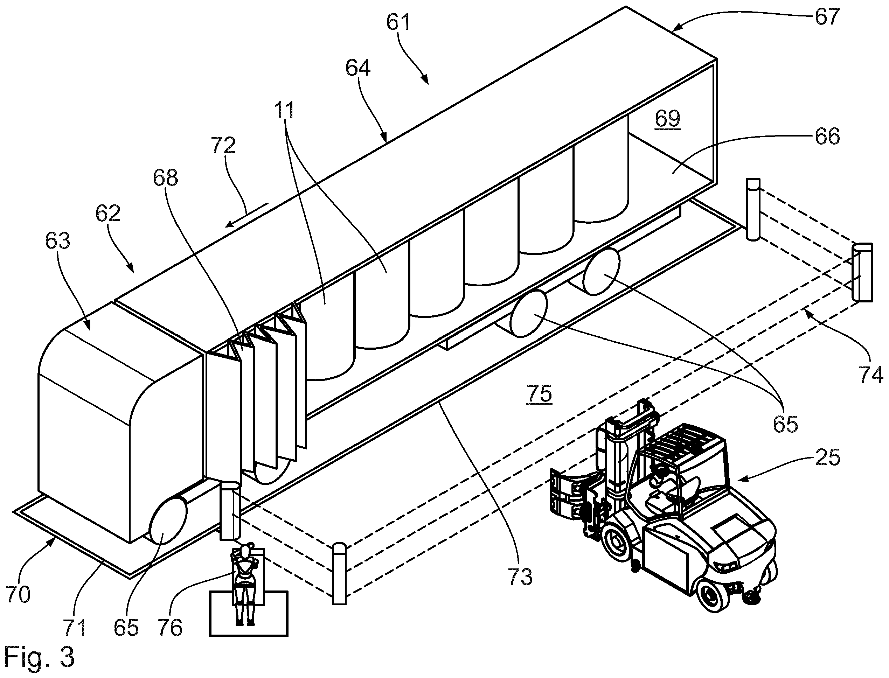

Der Überführungsanordnungs-Hauptweg 27 beginnt in einem Anliefersystem 61, das einen Sattelzug 62 umfasst (Fig. 1 bis 5). Mit dem Sattelzug 62 werden neue Materialrollen 11 angeliefert. Der Sattelzug 62 umfasst eine Sattelzugmaschine 63 und einen Sattelauflieger 64.

Die Sattelzugmaschine 63 wiederum weist ein Fahrgestell, einen Motor und ein Getriebe sowie eine Kupplung für den Sattelauflieger 64 auf.

Der Sattelauflieger 64 bildet einen Anhänger und umfasst Hinterachsen 65, die sich gegenüber einem Boden bzw. Platz abstützen. Er hat eine ebene Ladefläche 66 zum Tragen der Materialrollen 11. Die Materialrollen 11 stehen auf der Ladefläche 66 in mindestens einer Reihe längs des Sattelaufliegers 64. Sie sind in der Längsrichtung des Sattelaufliegers 64 horizontal beabstandet zueinander angeordnet. Alternativ berühren sei sich umfangsseitig. Der Sattelauflieger 64 weist außerdem ein Plangestell 67 auf, das eine Plane 68 trägt und einen Laderaum 69 räumlich begrenzt. Die Plane 68 ist seitlich und vorzugsweise auch hinten öffenbar, was einen Zugang zu dem Laderaum 69 ermöglicht. Der Laderaum 69 ist durch die Ladefläche 66 nach unten räumlich begrenzt.

Eine bodenseitige Haltemarkierung 70 gibt eine Soll-Halteposition für den Sattelzug 62 vor. Die Haltemarkierung 70 umfasst eine Längs-Haltelinie 71, die eine Längs-Soll-Halteposition des Sattelzugs 62 in dessen Längsrichtung 72 bzw. Fahrtrichtung vorgibt. Ferner hat die Haltemarkierung 70 zwei parallele Quer-Haltelinien 73, die beabstandet zueinander verlaufen und eine Soll-Quer-Halteposition senkrecht zu der Längsrichtung 72 bzw. Fahrtrichtung des Sattelzugs 62 vorgeben. Die Haltemarkierung 70 hat vorzugsweise eine rechteckige Kontur, die im Wesentlichen der Grundfläche des Sattelzugs 62 entspricht.

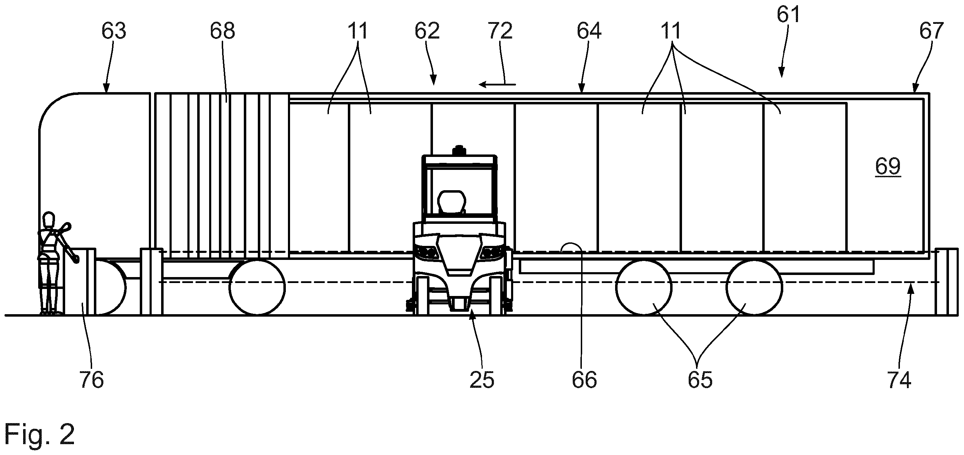

Das Anliefersystem 61 gemäß Fig. 2, 3, 5 umfasst außerdem eine Anliefer- bzw. Entlade-Sicherheitseinrichtung 74, die als Sicherheitslichtschranke ausgeführt ist und einen Anliefer- bzw. Entladebereich 75 benachbart zu dem in der Soll--Halteposition abgestellten Sattelzug 62 vor Betreten durch Personen sichert. Die Anliefer-Sicherheitseinrichtung 74 ist durch ein Bedienterminal 76 durch den Fahrer des Sattelzugs 62 oder eine andere Person aktivierbar. Das Bedienterminal 76 befindet sich dann benachbart zu der Sattelzugmaschine 63. Der Fahrer bzw. die andere Person aktiviert über das Bedienterminal 76 die Anliefer-Sicherheitseinrichtung 74 erst dann, wenn die Plane 68 so entfernt ist, dass die neu angelieferten Materialrollen 11 von dem Sattelzug 62 entladbar sind. Die Überführungsanordnung 25 fährt erst dann in den Anlieferbereich 75 ein, wenn die Anliefer-Sicherheitseinrichtung 74 aktiviert worden ist.

Die Überführungsanordnung 25 ist als automatisiertes bzw. fahrerloses Flurförderzeug ausgebildet (Fig. 6 bis 9). Das Flurförderzeug 25 hat einen auf Vorderräder 77 und Hinterräder 78 abgestützten Rahmen 79, welcher eine Kabine 80 und eine vordere Hydraulik-Hubvorrichtung 81 trägt. Die Vorderräder 77 und Hinterräder 78 stützen sich gegenüber dem Untergrund ab. Die Hinterräder 78 sind auslenkbar.

Der Rahmen 79 trägt außerdem eine Batterie bzw. einen Akkumulator (nicht dargestellt) und mindestens einen damit in elektrischer Verbindung stehenden Verfahrantrieb (nicht dargestellt), der bevorzugt mit den Hinterrädern 78 in Antriebsverbindung steht.

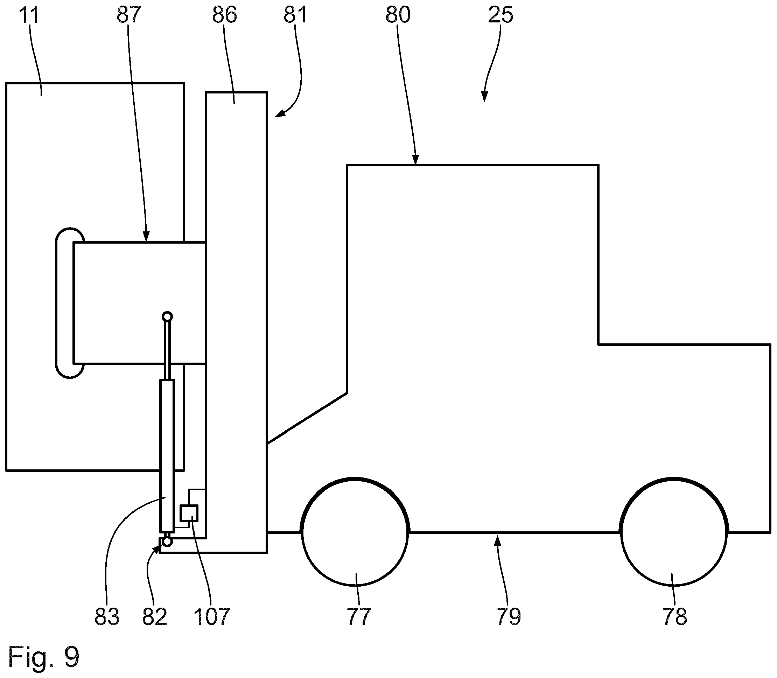

Der Rahmen 79 trägt außerdem ein Hydraulikaggregat 82 (Fig. 9). Das Hydraulikaggregat 82 wiederum steht mit einem von dem Rahmen 79 getragenen Hydrauliktank zur Versorgung der Hydraulik-Hubvorrichtung 81 mit Hydraulikfluid in Strömungsverbindung. Es umfasst eine Hydraulikpumpe und eine Hydraulik-Steuereinrichtung, die mit der Hydraulikpumpe und mindestens einem Hubzylinder 83 der Hydraulik-Hubvorrichtung 81 in Strömungsverbindung steht. Insbesondere findet Hydrauliköl Anwendung.

In der Kabine 80 sind ein Fahrersitz 84a sowie Bedienelemente des Flurföderzeugs 25 für einen Fahrer, falls erforderlich, angeordnet.

Das Hydraulikaggregat 82 dient bevorzugt auch zum Betrieb einer Lenkeinrichtung des Flurförderzeugs 25. In der Kabine 80 befindet sich auch ein Lenkrad 84b zur Betätigung der Lenkeinrichtung. Die Hydraulik-Steuereinrichtung steht dann auch mit der Lenkeinrichtung in Strömungsverbindung. Sie dient zur Steuerung der Hydraulikpumpe, insbesondere des mindestens einen Hubzylinders 83 und der Lenkeinrichtung. Durch die Lenkeinrichtung sind die Hinterräder 78 auslenkbar, damit das Flurförderzeug 25 eine Kurvenfahrt ausführen kann.

Das Flurförderzeug 25 weist außerdem eine elektrische Flurförderzeug-Steuereinheit 85 auf, die auch mit der Hydraulik-Steuereinrichtung in Signalverbindung steht.

Die Hydraulik-Hubvorrichtung 81 umfasst einen an dem Flurförderzeug 25 vorne angeordneten, vertikal erstreckenden Hubmast 86 mit einer daran nach oben und unten verfahrbaren Greifvorrichtung 87 zum sicheren Greifen und Heben sowie Halten einer Materialrolle 11.

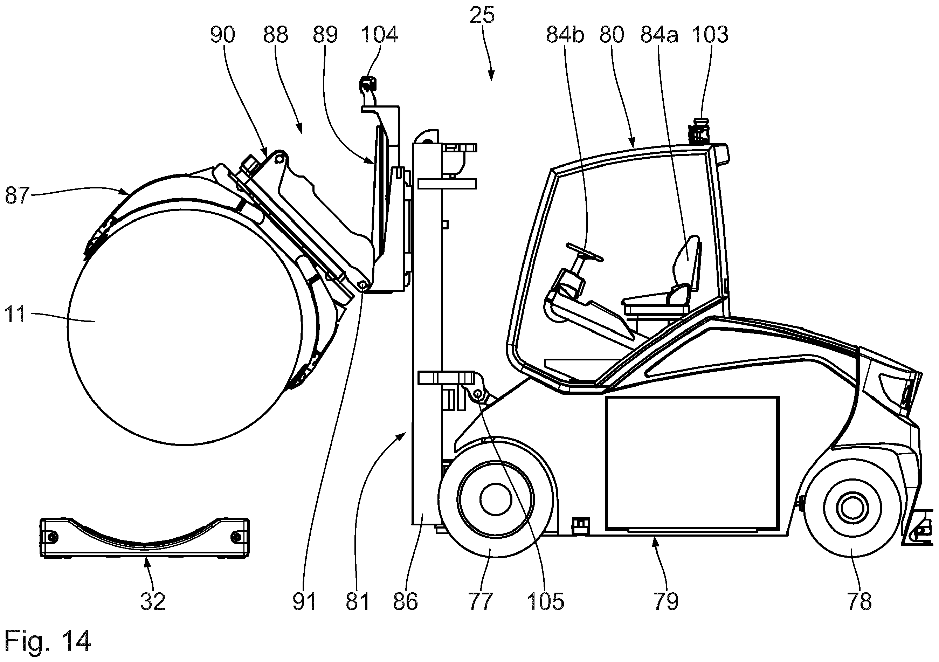

Die Greifvorrichtung 87 ist über eine beispielsweise in Fig. 14 gezeigte Kupplungsvorrichtung 88 an dem Hubmast 86 angeordnet. Die Kupplungsvorrichtung 88 umfasst eine an den Hubmast 86 angeschlossene Anschlusseinrichtung 89 und eine mit dieser beweglich verbundene Trageinrichtung 90. Die Anschlusseinrichtung 89 ist längs des Hubmasts 86 geführt verfahrbar. Sie ist beispielsweise als Schlitten ausgeführt. Die Trageinrichtung 90 ist gegenüber der Anschlusseinrichtung 89 um eine Schwenkachse 91 verschwenkbar. Ferner ist die gesamte Greifvorrichtung 87 verdrehbar. Sie umfasst einen plattenartigen Tragkörper 92.

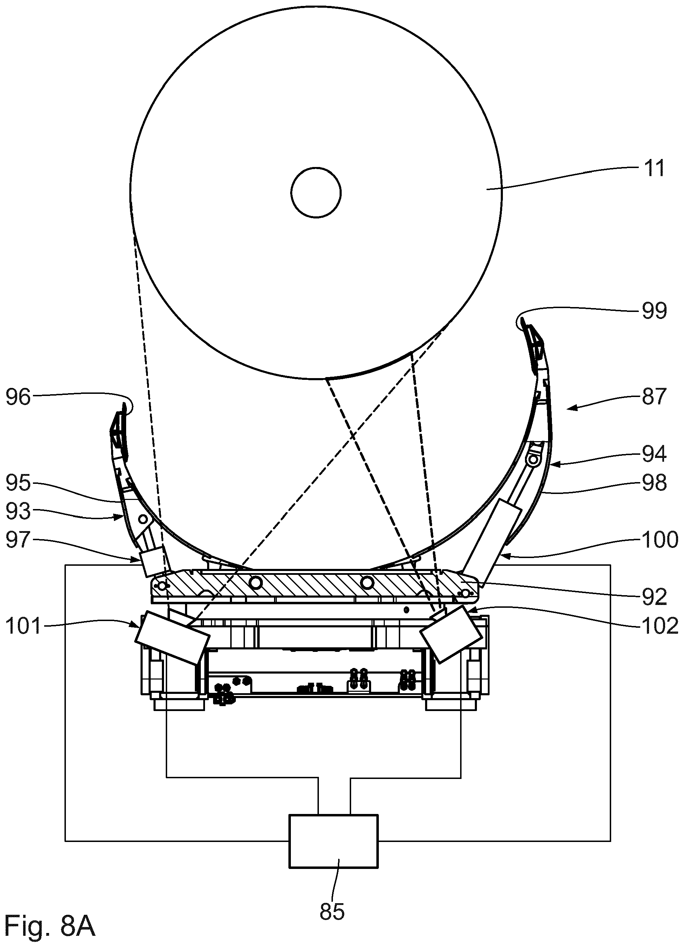

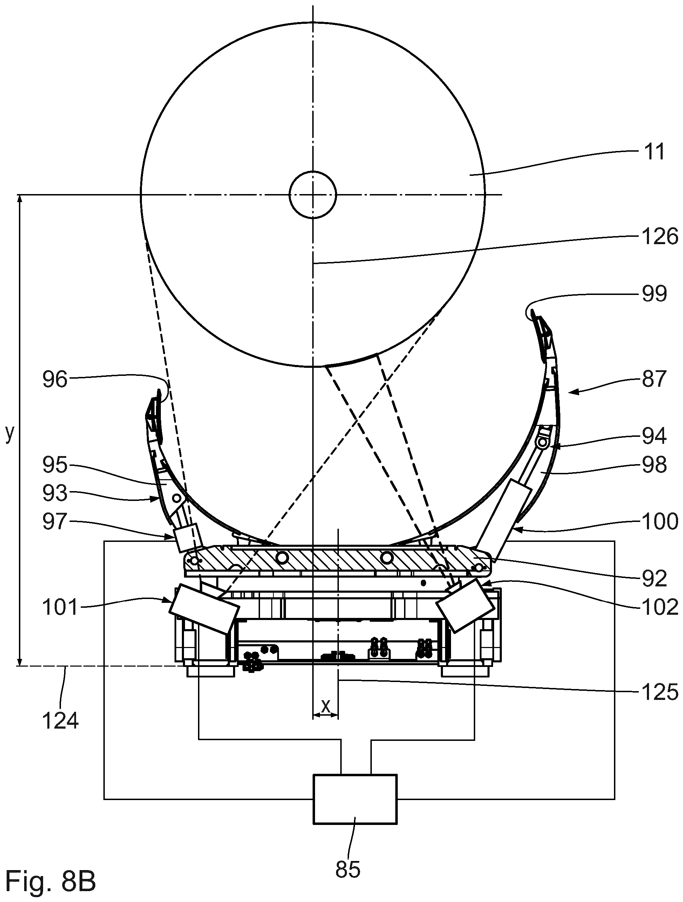

Die Trageinrichtung 90 umfasst einen plattenartigen Tragkörper 92. An dem Tragkörper 92 ist eine erste Greifarmeinrichtung 93 und eine zweite Greifarmeinrichtung 94 angelenkt. Die Greifarmeinrichtungen 93, 94 sind beabstandet zueinander an dem Tragkörper 92 angelenkt und angeordnet. Sie haben parallel zueinander verlaufende Schwenkachsen und sind relativ zueinander verschwenkbar (Fig. 8A).

Die erste Greifarmeinrichtung 93 hat einen ersten Greifarm 95 und eine erste Anlegebacke 96, die an einem freien Ende des ersten Greifarms 95 frei schwenkbar angeordnet ist. Der erste Greifarm 95 ist über eine erste, längenveränderliche Verstell-Zylindereinheit 97 verschwenkbar. Die erste Verstell-Zylindereinheit 97 ist zwischen dem ersten Greifarm 95 und dem Tragkörper 92 angeordnet und mit diesen gelenkig verbunden.

Die zweite Greifarmeinrichtung 94 hat einen zweiten Greifarm 98 und eine zweite Anlegebacke 99, die an einem freien Ende des zweiten Greifarms 98 frei schwenkbar angeordnet ist. Der zweite Greifarm 98 ist über eine zweite, längenveränderliche Verstell-Zylindereinheit 100 verschwenkbar. Die zweite Verstell-Zylindereinheit 100 ist zwischen dem zweiten Greifarm 98 und dem Tragkörper 92 angeordnet und mit diesen gelenkig verbunden.

Die Greifarme 95, 98 sind unter Begrenzung eines im Wesentlichen teilkreisförmigen Materialrollen-Aufnahmeraums gekrümmt. Die Anlegebacken 96, 99 sind günstigerweise konstruktiv identisch. Ihre Anlegeflächen sind einander zugewandt.

Der zweite Greifarm 98 ist wesentlich länger als der erste Greifarm 95. Er ist vorzugsweise mindestens 30 %, bevorzugt mindestens 40 %, bevorzugt mindestens 50 %, länger als der erste Greifarm 95. Er ist höchstens 120 %, bevorzugt höchstens 100 %, bevorzugt höchstens 80 %, länger als der erste Greifarm 95. Die Greifvorrichtung 87 ist asymmetrisch, sodass sie auf engstem Raum einsetzbar ist. Die Greifarmeinrichtungen 93, 94 haben eine unterschiedliche Länge bzw. Größe. Die Anlegeflächen der Anlegebacken 96, 99 haben normalerweise unterschiedliche Abstände zu dem Tragkörper 92.

Jede Verstell-Zylindereinheit 97, 100 steht mit der Hydraulik-Steuereinrichtung des Flurförderzeugs 25 zur Betätigung derselben in Verbindung.

Die Kupplungsvorrichtung 88 trägt außerdem eine Materialrollen-Erfassungsvorrichtung, die eine erste Materialrollen-Erfassungseinheit 101 und eine zweite Materialrollen-Erfassungseinheit 102 umfasst (vor allem Fig. 8A-8D). Die Materialrollen-Erfassungseinheiten 101, 102 sind seitlich beabstandet zueinander angeordnet. Sie sind benachbart zu Anlenkstellen der Verstell-Zylindereinheiten 97, 100 an dem Tragkörper 92 angeordnet. Die Materialrollen-Erfassungseinheiten 101, 102 sind derart orientiert, dass sie im Stande sind, eine zu überführende bzw. zu greifende Materialrolle 11 zu erfassen. Sie sind in Bezug auf das Flurförderzeug 25 nach vorne gerichtet. Außerdem sind sie schräg zueinander angeordnet. Die Materialrollen-Erfassungseinheiten 101, 102 sind aufeinander zu verkippt angeordnet, sodass deren Erfassungsbereiche einander überlagern bzw. überdecken.

Jede Materialrollen-Erfassungseinheit 101, 102 steht mit der Flurförderzeug-Steuereinheit 85 in Signalverbindung.

An der Kabine 80 ist oben ein Navigationssensor 103 zum Navigieren des Flurförderzeugs 25 angeordnet. Der Navigationssensor 103 steht mit der Flurförderzeug-Steuereinheit 85 in Signalverbindung.

Die Kupplungsvorrichtung 88 trägt eine Objekt-Erkennungsvorrichtung 104, die in Bezug auf das Flurförderzeug 25 nach vorne gerichtet ist. Die Objekt-Erkennungsvorrichtung 104 steht mit der Flurförderzeug-Steuereinheit 85 in Signalverbindung.

Der Hubmast 86 ist um eine horizontal verlaufende Neigungsachse 105 in seiner Neigung unten verstellbar. Er ist in Bezug auf die Kabine 80 nach vorne und hinten schwenkbar. Dem Hubmast 86 ist ein Neigungssensor 106 zugeordnet, der im Stande ist, die aktuelle Neigung des Hubmasts 86 und somit auch die aktuelle Neigung der Greifvorrichtung 87 zu erfassen. Der Neigungssensor 106 ist an dem Rahmen 79 angeordnet. Der Neigungssensor 106 steht mit der Flurförderzeug-Steuereinheit 85 in Signalverbindung.

Die Hydraulik-Hubvorrichtung 81 umfasst eine Hydraulikfluid-Druckänderungs-Erkennungseinrichtung 107, die in einer Hydraulikleitung des Flurförderzeugs 25 angeordnet und im Stande ist, eine Druckveränderung des Hydraulikfluids der Hydraulik-Hubvorrichtung 81 bei Änderung einer Last zu erkennen (Fig. 9). Die Hydraulikfluid-Druckänderungs-Erkennungseinrichtung 107 steht mit der Flurförderzeug-Steuereinheit 85 in Signalverbindung.

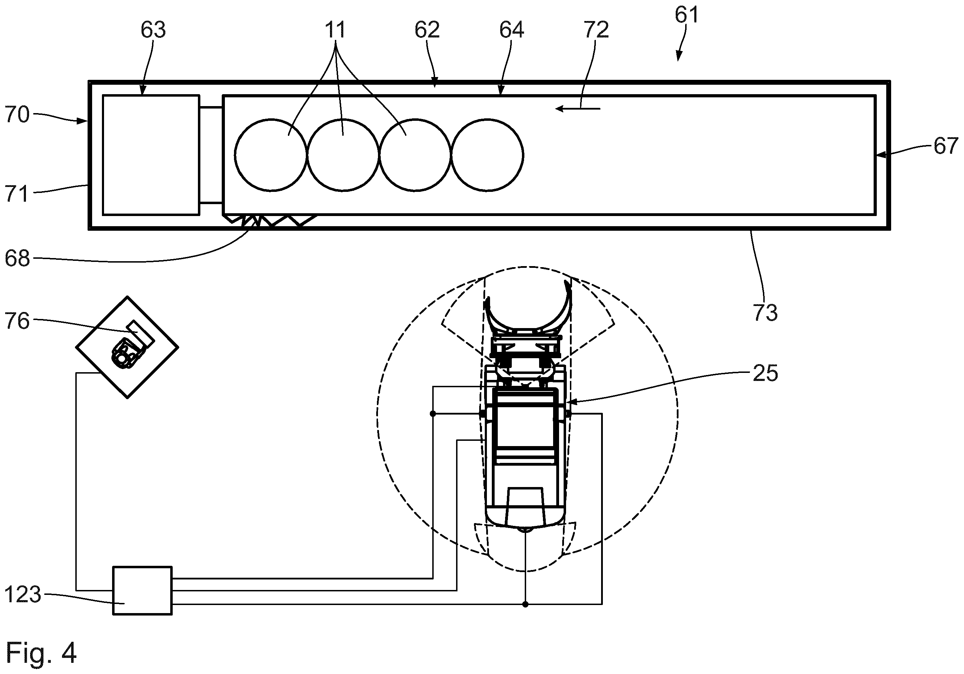

Das Flurförderzeug 25 hat ferner mehrere Sicherheits-Laserscanvorrichtungen 108, die mit der Flurförderzeug-Steuereinheit 85 in Signalverbindung stehen und imstande sind, bei erkannter Gefahr das Flurförderzeug 25 sofort zu stoppen. Eine erste Sicherheits-Laserscanvorrichtung 108 ist hinten an dem Rahmen 79 angeordnet und nach hinten in Bezug auf das Flurförderzeug 25 gerichtet. Eine zweite Sicherheits-Laserscanvorrichtung 108 ist unten an dem Hubmast 86 angeordnet und in Bezug auf das Flurförderzeug 25 nach vorne gerichtet. An dem Rahmen 79 sind außerdem dritte Sicherheits-Laserscanvorrichtungen 108 angeordnet, die jeweils nach seitlich außen gerichtet sind. Ein derart ausgestattetes Flurförderzeug 25 findet beispielsweise bei dem in Fig. 4 gezeigten Anliefersystem 61 Anwendung. Ein solches Anliefersystem 61 kommt ohne Sicherheitslichtschranke 74 aus. Die Sicherheits-Laserscanvorrichtungen 108 stehen mit einer zentralen Steuerung 123 in Signalverbindung, die mit einem Bedienterminal 76 in Signalverbindung steht.

Jeder Antriebsachse 109 des Flurförderzeugs 25 ist ein Antriebsachsen-Sicherheitsencoder 110 zugeordnet, der im Stande ist, Informationen in Bezug auf Winkel und Umdrehungszahlen des Antriebs bzw. der entsprechenden Antriebsachse 109 zu liefern. Die Antriebsachsen-Sicherheitsencoder 25 stehen mit der Flurförderzeug-Steuereinheit 85 in Signalverbindung. Das Flurförderzeug 25 ist so besonders gut manövrierbar.

Einer Lenkachse 111 des Flurförderzeugs 25 ist ein Lenkachsen-Sicherheitsencoder 112 zugeordnet, der im Stande ist, Informationen über Lage und Winkel der Lenkachse 111 zu liefern. Der Lenkachsen-Sicherheitsencoder 112 steht mit der Flurförderzeug-Steuereinheit 85 in Signalverbindung. Das Flurförderzeug 25 ist so besonders gut manövrierbar.

Der Kupplungsvorrichtung 88 ist ein Greifarmwinkel-Encoder 113 zugeordnet, der im Stande ist, Informationen bezüglich Lage und Winkel der Greifarmeinrichtungen 93, 94 zu liefern. Jeder Greifarmwinkel-Encoder 113 steht mit der Flurförderzeug-Steuereinheit 85 in Signalverbindung. Die Greifvorrichtung 87 ist so besonders sicher einsetzbar und in Bezug auf die zu greifende Materialrolle 11 ausrichtbar.

Die Trageinrichtung 90 trägt außerdem einen Neigungssensor 114, der im Stande ist, eine Neigung der Greifvorrichtung 87 gegenüber dem Hubmast 86 zu erfassen. Der Neigungssensor 114 steht mit der Flurförderzeug-Steuereinheit 85 in Signalverbindung. Die Greifvorrichtung 87 ist so besonders sicher einsetzbar und in Bezug auf die zu greifende Materialrolle 11 ausrichtbar.

Ferner trägt die Trageinrichtung 90 einen Neigungssensor 115, um eine Neigung der Greifvorrichtung 87 gegenüber einer Vertikalen zu erkennen. Der Neigungssensor 115 steht mit der Flurförderzeug-Steuereinheit 85 in Signalverbindung. Die Greifvorrichtung 87 ist so besonders sicher einsetzbar und in Bezug auf die zu greifende Materialrolle 11 ausrichtbar.

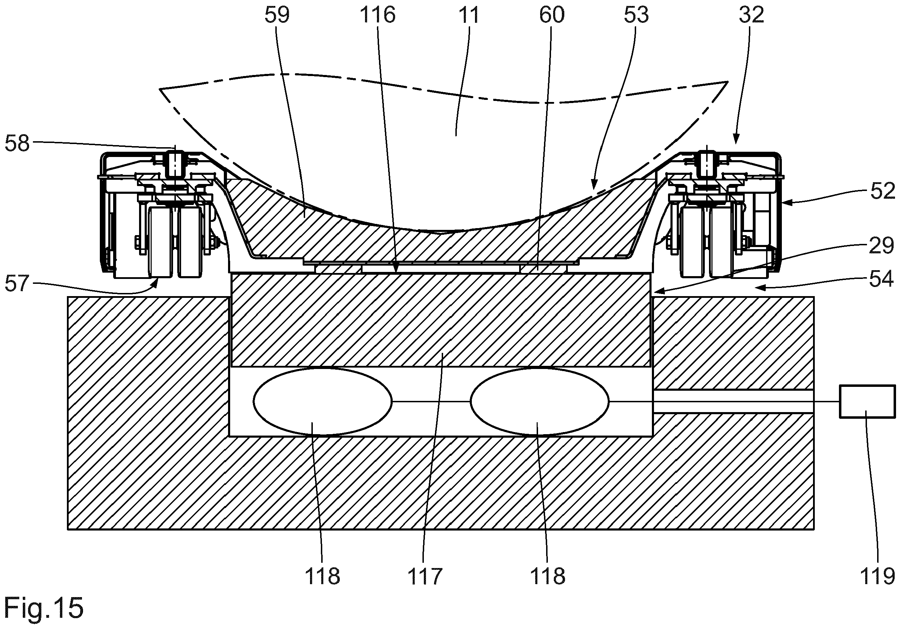

Jedes Übergabesystem 29 umfasst in dem jeweiligen Übergabebereich 31 eine Transportwagen-Entlastungsvorrichtung 116 (Fig. 15), die einen in der Höhe verlagerbaren starren Anhebekörper 117 umfasst. Im Nichtgebrauch ist der Anhebekörper 117 bündig mit dem benachbarten Untergrund. Jeder Anhebekörper 117 ist in der Höhe mittels einer Kissenanordnung 118 geführt verlagerbar, die mittels eines Aktors 119 dafür mit einem Gas, wie Luft, aufblasbar ist. Jeder Anhebekörper 117 ist beispielsweise um mindestens 1 cm, bevorzugt mindestens 3 cm, bevorzugt mindestens 5 cm, anhebbar. Er ist vorzugsweise um höchstens 20 cm, bevorzugt höchstens 15 cm, bevorzugt höchstens 10 cm, anhebbar. Zum Absenken des Anhebekörpers 117 ist mittels des zugehörigen Aktors 119 das Gas aus der Kissenanordnung 118 wieder kontrolliert auslassbar. Anstelle einer Kissenanordnung 118 ist beispielsweise ein Spindel- oder Hydrauliksystem einsetzbar.

Jeder Anhebekörper 117 ist beispielsweise plattenartig bzw. blockartig und hat eine rechteckige obere Angreiffläche. Jede Angreiffläche weist eine erste Abmessung auf, die in etwa einer Querabmessung des mindestens einen Rinnenteils 59 entspricht. Sie ist kleiner als die Querabmessung eines gesamten Transportwagens 32. Eine zu der ersten Abmessung senkrechte zweite Abmessung der Angreiffläche entspricht beispielsweise einer Längsabmessung des mindestens einen Rinnenteils 59.

Jedes Übergabesystem 29 umfasst außerdem zwei Materialrollen-Orientierungs-Erfassungssensoren 120, die im Stande sind, die Orientierung einer überführten Materialrolle 11 in dem jeweiligen Übergabebereich 31 bzw. benachbart zu diesem zu erfassen. Die Materialrollen-Orientierungs-Erfassungssensoren 120 sind, bevorzugt auf einer gemeinsamen Höhe, beabstandet seitlich nebeneinander angeordnet. Sie erfassen im Einsatz axiale Endbereiche der Materialrolle 11. Insbesondere ist so eine Schrägstellung der Materialrolle 11, vor allem in der Horizontalen, erfassbar. Jeder Materialrollen-Orientierungs-Erfassungssensor 120 steht mit einer Recheneinheit 121 in Signalverbindung, die wiederum mit dem Transportwagen 32 in dem jeweiligen Übergabebereich 31 zum Ausrichten desselben nach dieser Materialrolle 11, sofern notwendig, in Signalverbindung steht.

Jeder Übergabereich 31 ist durch einen Schutzzaun 122 geschützt, der sich entlang der Materialrollen-Orientierungs-Erfassungssensoren 120 erstreckt. Bei erkannter Gefahr wird die Übergabe sofort gestoppt.

Nachfolgend wird der Betrieb der Gesamtanlage detaillierter beschrieben.

Wenn der Sattelzug 62 von einem Fahrer in seine Soll-Halteposition gebracht worden und über das Bedienterminal 76 von dem Fahrer oder einer anderen Person eine Freigabe der Entladung des Sattelzugs 62 nach entsprechender Entfernung der Plane 68 erfolgt ist, beginnt ein Flurförderzeug 25 selbständig mit dem Abladen der Materialrollen 11 aus dem Laderaum 69. Günstigerweise erfolgt die Entladung des Sattelzugs 62 von seitlich außen. Das Flurförderzeug 25 ist im Stande, fahrerlos bzw. vollständig automatisch zu arbeiten (Fig. 1 bis 5). Es ist entsprechend über seine Kommunikationseinrichtung aktiviert worden.

Die Objekt-Erkennungsvorrichtung 104 des Flurförderzeugs 25 ist im Stande, den Sattelzug 62 zu erkennen. Insbesondere ist die Objekt-Erkennungsvorrichtung 104 im Stande, die Ladefläche 66, die Materialrollen 11 und das Plangestell 67 sowie die Plane 68, sofern vorhanden, zu erkennen.

Die Materialrollen-Erfassungseinheiten 101, 102 sind im Stande, unterschiedliche Umfangsabschnitte der zu greifenden Materialrolle 11 zu erfassen. Die erfassten Umfangsabschnitte befinden sich auf einer gemeinsamen Höhe. Der erste Erfassungsbereich der ersten Materialrollen-Erfassungseinheit 101 ist wesentlich größer als der zweite Erfassungsbereich der zweiten Materialrollen-Erfassungseinheit 102. Er erfasst vorzugsweise einen ersten Umfangsabschnitt der Materialrolle 11, der einen angularen Winkel zwischen 100° und 150° einschließt. Der zweite Erfassungsbereich der zweiten Materialrollen-Erfassungseinheit 102 erfasst bevorzugt einen zweiten Umfangsabschnitt der Materialrolle 11, der einen angularen Winkel zwischen 10° und 50° einschließt. Der zweite Erfassungsbereich liegt vollständig innerhalb des ersten Erfassungsbereichs.

Die erste Materialrollen-Erfassungseinheit 101 ist insbesondere im Stande, den tatsächlichen Durchmesser der zu greifenden Materialrolle 11 zu erfassen. Die zweite Materialrollen-Erfassungseinheit 102 ist insbesondere im Stande, ein an der Materialrolle 11 umfangsseitig angeordnetes Identifikationslabel bzw. -etikett zu erfassen bzw. zu lesen, das bevorzugt einen Barcode enthält und der eindeutigen Identifikation der zu greifenden Materialrolle 11 dient.

Die erste Materialrollen-Erfassungseinheit 101 vergleicht den tatsächlich erfassten Durchmesser der Materialrolle 11 über die eindeutige Identifikation der Materialrolle 11 mittels der zweiten Materialrollen-Erfassungseinheit 102 mit einem bekannten Durchmesserwert aus einer Datenbank und/oder dem auf dem Identifikationslabel angegebenen Durchmesserwert.

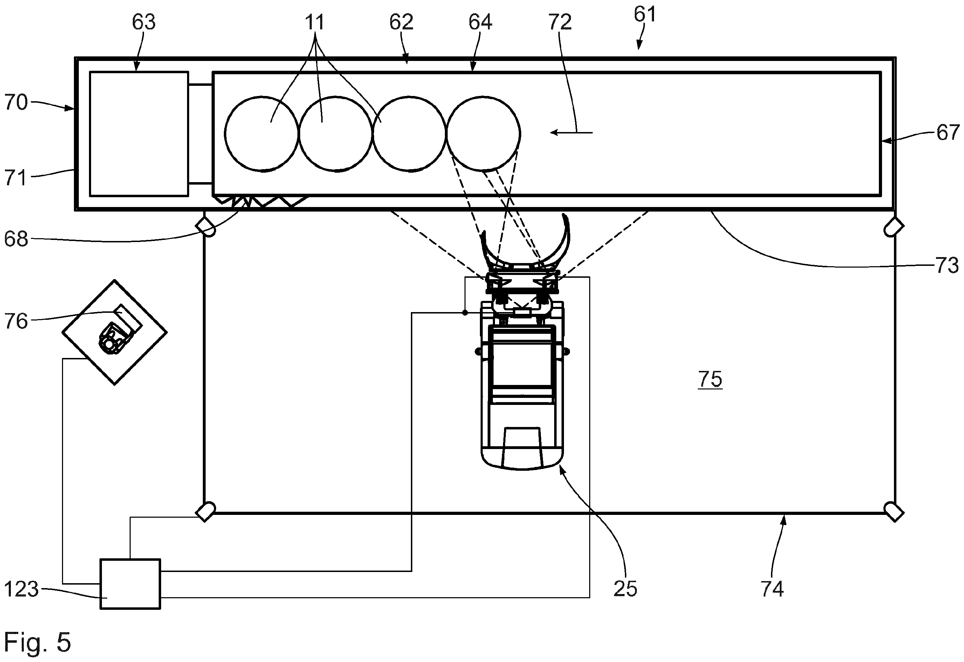

Die Anliefer-Sicherheitseinrichtung 74 ist bei der Ausführungsform gemäß Fig. 2, 3, 5 aktiv. Alternativ oder zusätzlich sind die Sicherheits-Laserscanvorrichtungen 108 aktiv (Fig. 5). Sie sind imstande, das Flurförderzeug 25 bei erkannter Gefahr sofort zu stoppen.

Zum Greifen einer zu greifenden Materialrolle 11 wird zunächst bei offener Greifvorrichtung 87 die erste Greifarmeinrichtung 93 mit ihrer ersten Anlegebacke 96 umfangsseitig mit der zu greifenden Materialrolle 11 in Anlage gebracht. Die erste Greifarmeinrichtung 93 befindet sich dabei in Abhängigkeit des Durchmessers der zu greifenden Materialrolle 11 in einer vorbestimmten Stellung. Bei Materialrollen 11 mit großem Durchmesser (zum Beispiel ≥ 150 cm) nimmt die erste Greifarmeinrichtung 93 eine äußere bzw. weite Stellung ein. Bei Materialrollen 11 mit kleinerem Durchmesser (zum Beispiel < 150 cm) nimmt die erste Greifarmeinrichtung 93 eine innere bzw. enge Stellung ein. Die erste Anlagebacke 96 liegt dann umfangsseitig an der zu greifenden Materialrolle 11 an. Dies geschieht durch entsprechendes Verfahren und Lenken des Flurförderzeugs 25. Die Greifvorrichtung 87 ist längs des Hubmasts 86 in eine entsprechende Höhe gefahren worden.

Wenn sich die zu greifende, stehende Materialrolle 11 dann in der Greifvorrichtung 87 befindet, wird die zweite Greifarmeinrichtung 94 zum eigentlichen Greifen in Richtung auf die fixierte erste Greifarmeinrichtung 93 mittels Betätigung der zweiten Verstell-Zylindereinheit 100 verschwenkt, sodass die Greifvorrichtung 87 geschlossen wird. Die zweite Greifarmeinrichtung 94 kommt dann mit ihrer zweiten Anlegebacke 99 mit der zu greifenden Materialrolle 11 unter Reduzierung des Materialrollen-Aufnahmeraums in Anlage. Die Materialrolle 11 ist von der Greifvorrichtung 87 klemmend gehalten. Eine durch die Anlegebacken 96, 99 laufende Anlegeachse verläuft in der Horizontalen schräg zu einer Längsachse des Flurförderzeugs 25. Die Greifarmeinrichtungen 93, 94 befinden sich dabei bevorzugt in einer gemeinsamen, im Wesentlichen horizontalen Ebene. Der Hubmast 86 ist gegenüber einer Vertikalen ungeneigt.

Die Ansteuerung der Greifvorrichtung 87, des Verfahrantriebs und/oder der Lenkung der Überführungsanordnung 25 erfolgt in Abhängigkeit des jeweiligen Durchmessers der zu greifenden Materialrolle 11. Der Durchmesser der zu greifenden Materialrolle 11 ist beispielsweise über den ersten Materialrollen-Erfassungssensor 101 bestimmbar oder über das auf dieser Materialrolle 11 angeordnete Etikett/Label mittels des zweiten Materialrollen-Erfassungssensors 102. In Abhängigkeit der fixierten bzw. vorpositionierten Stellung der ersten Greifarmeinrichtung 93 und dem Durchmesser der zu greifenden Materialrolle 11 ergibt sich eine theoretische Soll-Mittelachse der zu greifenden Materialrolle 11. Die Soll-Mittelachse wird mit der tatsächlichen Mittelachse der realen zu greifenden Materialrolle 11 mittels der ersten und zweiten Materialrollen-Erfassungseinheit 101, 102 abgeglichen. Die Mittelachse der Sollposition verschiebt sich durch die Asymmetrie der Greifvorrichtung 87 und der Asymmetrie in der Ansteuerung der Greifarmeinrichtungen 93, 94. In Abhängigkeit dieser Werte wird insbesondere die zweite Greifarmeinrichtung 93 bzw. 94, der Verfahrantrieb und/oder die Lenkung der Überführungsanordnung 25 derart betätigt, dass sie die Materialrolle 11 sicher greifen und im Wesentlichen in einander gegenüberliegenden Umfangsbereichen der Materialrolle 11 an der Materialrolle 11 angreifen.

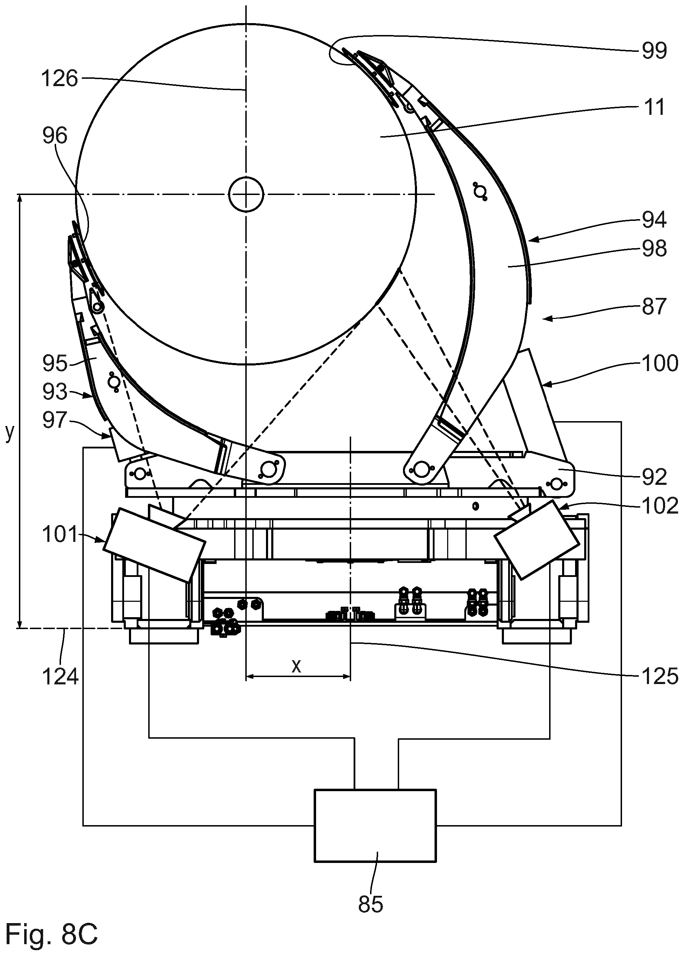

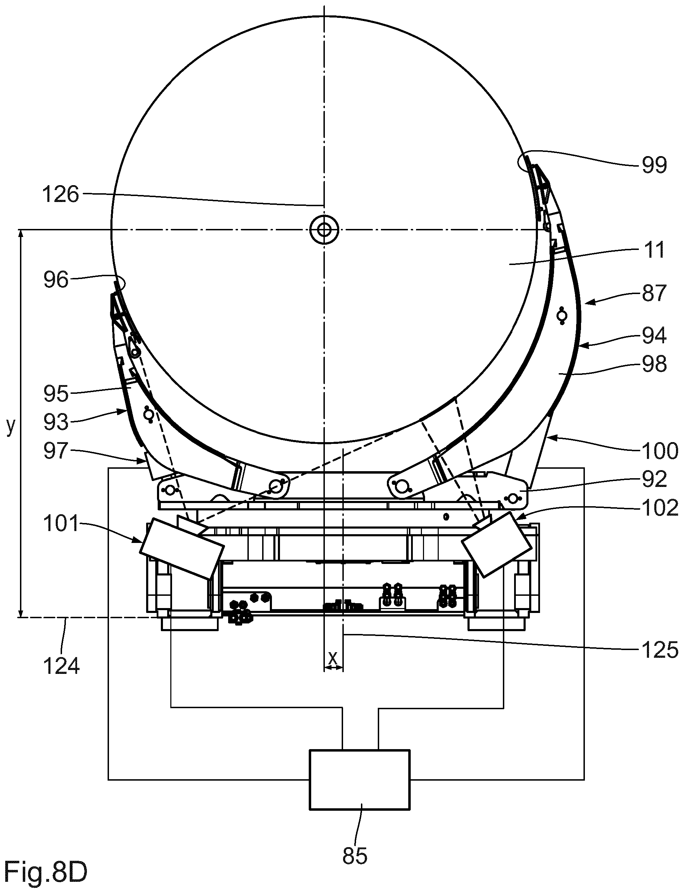

In Abhängigkeit eines Durchmessers der Materialrolle 11 verschiebt sich die Mittelachse der Materialrolle 11 gegenüber einem Nullpunkt bzw. der Mittelebene 125 der Greifvorrichtung 87. Die Mittelachse der Materialrolle 11 verschiebt sich dabei auf einer Kurve bzw. Funktion, die bei dem Anfahren der Materialrolle 11 entsprechend zu berücksichtigen ist. Wie Fig. 8C zeigt, ist bei einer einen kleinen Durchmesser aufweisenden, gegriffenen Materialrolle 11 der seitliche horizontale Versatz zwischen der Mittelebene 125 der Greifvorrichtung 87 und der die Mittelachse der Materialrolle 11 einschließenden Mittelebene 126 der Materialrolle 11 vergleichsweise groß (x-Wert). Wie Fig. 8D zeigt, ist bei einer einen großen Durchmesser aufweisenden, gegriffenen Materialrolle 11 der seitliche horizontale Versatz zwischen der Mittelebene 125 der Greifvorrichtung 87 und der die Mittelachse der Materialrolle 11 einschließenden Mittelebene 126 der Materialrolle 11 vergleichsweise klein (x-Wert). Je größer der Durchmesser der gegriffenen Materialrolle 11 ist, desto kleiner ist der seitliche horizontale Versatz zwischen der Mittelebene 125 der Greifvorrichtung 87 und der die Mittelachse der Materialrolle 11 einschließenden Mittelebene 126 der Materialrolle 11. Der erste Greifarm 95 hat beim Greifen der Materialrolle 11 eine im Wesentlichen identische fixierte bzw. vorpositionierte Stellung bzw. Auslenkung. Je kleiner der Durchmesser der gegriffenen Materialrolle 11 ist, desto weiter ist der zweite Greifarm 98 in Richtung auf den ersten Greifarm 95 bzw. die Mittelebene 125 der Greifvorrichtung 87 verschwenkt. Je kleiner der Durchmesser der gegriffenen Materialrolle 11 ist, desto weiter ist die gegriffene Materialrolle 11 von der Referenzebene 124 bzw. von den Anlenkstellen der Greifarme 95, 98 an dem Tragkörper 92 entfernt gehalten.

Beim Anheben der Materialrolle 11 erkennt die Hydraulikfluid-Druckänderungs-Erkennungseinrichtung 107 eine Druckveränderung des Hydraulikfluids der Hydraulik-Hubvorrichtung 81. Bei Erreichen eines Höhepunkts eines Anstiegs eines Drucks des Hydraulikfluids erkennt die Hydraulikfluid-Druckänderungs-Erkennungseinrichtung 107 einen vollständig angehobenen Zustand der Materialrolle 11. Die Materialrolle 11 ist dann vollständig von der Ladefläche 66 abgehoben. Die Hydraulik-Hubvorrichtung 81 hebt dann die Materialrolle 11 weiter um 20 mm an, um ein sicheres Entladen und gegebenenfalls Heben über Beschläge, Abschlüsse, Spanngurte, eine Ladekante oder dergleichen des Sattelzugs 62 zu gewährleisten, aber eine Beschädigung eines Dachs des Sattelzugs 62 zu verhindern. Sie ist dazu von der Flurförderzeug-Steuereinheit 85 entsprechend angesteuert worden.

Zum Entnehmen der Materialrollen 11 fährt das Flurförderzeug 25 rückwärts und entfernt sich dabei von dem Sattelzug 62.

Das Flurförderzeug 25 bringt dann die gegriffene Materialrolle 11 in stehender Stellung in das Materialrollenlager 10. Es fährt dabei über den Überführungsanordnungs-Hauptweg 27 auf den Überführungsanordnungs-Umlaufweg 26 und dann zu der jeweiligen Gruppe 12. Das Flurförderzeug 25 stellt die Materialrolle 11 an dem vorbestimmten Ort stehend ab. Die Objekt-Erkennungsvorrichtung 104 unterstützt das Abstellen an dem vorbestimmten Ort. Beim Abstellen wird die Greifvorrichtung 87 samt Materialrolle 11 abgesenkt. Die Hydraulikfluid-Druckänderungs-Erkennungseinrichtung 107 erkennt auch, wenn die Materialrolle 11 abgestellt worden ist. Die Materialrollen 11 bleiben in dem Materialrollenlager 10 bis sie benötigt werden.

Eine übergeordnete Steuerung veranlasst die Abholung einer zu verwenden Materialrolle 11 aus dem Materialrollenlager 10 für die Wellpappeproduktion in der Wellpappeanlage 1. Für den Betrieb der Wellpappeanlage 1 benötigte Materialrollen 11 werden über Flurförderzeuge 25 aus dem Materialrollenlager 10 geholt. Sie werden über den Überführungsanordnungs-Hauptweg 27 dem ersten Übergabesystem 29 oder über den Überführungsanordnungs-Hauptweg 27 und den Überführungsanordnungs-Querweg 28 dem zweiten Übergabesystem 29 zugeführt.

Bei dem jeweiligen Übergabebereich 31 erfolgt eine Übergabe der Materialrolle 11 von dem Flurförderzeug 25 auf einen bereitgestellten Transportwagen 32. Dabei wird zum einen die Greifvorrichtung 87 aus ihrer bisherigen Stellung um 90° verdreht, sodass die gegriffene Materialrolle 11 eine liegende, horizontale Stellung einnimmt. Ferner wird die Trageinrichtung 90 um die Schwenkachse 91 ausgeschwenkt. Die Greifvorrichtung 87 wird dann abgesenkt und geöffnet.

Vor Ablage der Materialrolle 11 in die Materialrollenaufnahme 53 wird die Kissenanordnung 118 über den Aktor 119 aufgeblasen, was zu einem Anheben bzw. vertikalen Verlagern des Anhebekörpers 117 führt. Der Anhebekörper 117 greift dann von unten an der mindestens einen Abstützplatte 60 bzw. dem mindestens einen Rinnenteil 59 an, wodurch der Transportwagen 32 entlastet wird und sämtliche Radeinheiten 54 von dem Untergrund abgehoben werden. Die Radeinheiten 54 befinden sich dann in der Luft. Eine Lasteinleitung erfolgt direkt in den angehobenen Anhebekörper 117. Die Kissenanordnung 118 ist ein Stück weit nachgiebig, um den steifen Transportwagen 25 zu schonen.

Die in der Materialrollenaufnahme 53 angeordnete Materialrolle 11 liegt auf dem Materialrollen-Erkennungssensor, der so eine Beladung mit der Materialrolle 11 erkennt. Sie erstreckt sich horizontal. Die Materialrolle 11 liegt auf dem mindestens einen Rinnenteil 59. Das mindestens eine Rinnenteil 59 liegt über einem Teilumfangsbereich der Materialrolle 11 an dieser unten und/oder seitlich an.

Der Transportwagen 32 fährt dann nach Absenkung des Anhebekörpers 117 durch den Aktor 119, falls notwendig, zu der benachbarten Materialrollen-Vorbereitungsanordnung 147, wo die angelieferte Materialrolle 11 aufgenommen und vorbereitet wird.

Nach Abschluss der Vorbereitung fährt dann die vorbereitete Materialrolle 11 mit einem/dem Transportwagen 32 zu einer entsprechenden Abrolleinheit, die diese Materialrolle 11 benötigt. Alternativ wird der Bypass genutzt und die Materialrollen-Vorbereitungsanordnung 147 umfahren.

Die zentrale Steuereinrichtung schickt anschließend den beladenen Transportwagen 32 zu der die Materialrolle 11 benötigenden Spleißvorrichtung 3, 4, 6, 7, 8.

Der Transportwagen 32 fährt dann über den entsprechenden Weg zu der Spleißvorrichtung 3, 4, 6, 7, 8.

Jedes Flurförderzeug 25 ist auch manuell steuerbar. In der Gesamtanlage kommen mehrere Flurförderzeuge 25 und Transportwagen 32 zum Einsatz. Ein Umschalten zwischen manueller Lenkung und automatisierter Lenkung bzw. automatisierter Ansteuerung von Lenkzylindern des Flurförderzeugs 25 ist günstigerweise möglich. Eine Umstellung auf manuellen Betrieb erfolgt vorzugsweise bei kritischen bzw. schwierigen Situationen in der Handhabung der zu überführenden Materialrolle 11.

Signalverbindungen können beispielsweise drahtlos oder drahtgebunden ausgeführt sein. Mit den Signalverbindungen sind Signale übertragbar bzw. übermittelbar.

Die Gesamtanlage ist quasi vollständig automatisiert betreibbar.

Gemäß einer alternativen Ausführungsform wird Wellpappe hergestellt, die sich in ihrer Lagenanzahl von der beschriebenen Wellpappe unterscheidet. Die dazu eingesetzte Wellpappeanlage 1 ist entsprechend geändert.

Einzelne Aspekte bzw. Gegenstände können Teil einer eigenständigen Erfindung sein.

## Patentansprüche

1. Übergabesystem zum Übergeben eines Guts (11), insbesondere einer Materialrolle,
a) mit einer Überführungsanordnung (25) zum Übergeben eines Guts (11) zu einem Transportwagen (32) in einem Übergabereich (31), und
b) mit einem Transportwagen (32) zum Aufnehmen des Guts (11) von der Überführungsanordnung (25) in dem Übergabereich (31).

2. Übergabesystem nach Anspruch 1, **gekennzeichnet durch** eine in dem Übergabebereich (31) angeordnete Transportwagen-Entlastungsvorrichtung (116) zum Entlasten des Transportwagens (32) bei Aufnahme des zu übergebenden Guts (11).

3. Übergabesystem nach Anspruch 2, **dadurch gekennzeichnet, dass** die Transportwagen-Entlastungsvorrichtung (116) eine Anhebevorrichtung zum Anheben des Transportwagens (32), insbesondere von unten, bei Aufnahme des zu übergebenden Guts (11) umfasst.

4. Übergabesystem nach Anspruch 3, **dadurch gekennzeichnet, dass** die Anhebevorrichtung bei Gebrauch an einer Güteraufnahme (53) des Transportwagens (32) angreift.

5. Übergabesystem nach Anspruch 3 oder 4, **dadurch gekennzeichnet, dass** die Anhebevorrichtung beabstandet zu einem Gestell (52) des Transportwagens (32) an dem Transportwagen (32) angreift.

6. Übergabesystem nach einem der Ansprüche 3 bis 5, **dadurch gekennzeichnet, dass** die Anhebevorrichtung eine Kompensations-Federeinheit zur Kompensation einer Spitzenlast aufweist.

7. Übergabesystem nach einem der vorherigen Ansprüche, **gekennzeichnet durch** eine Ausrichtanordnung zum Ausrichten des Transportwagens (32) nach dem von der Überführungsanordnung (25) in den Übergabebereich (31) überführten Gut (11).

8. Übergabesystem nach Anspruch 7, **dadurch gekennzeichnet, dass** die Ausrichtanordnung eine Güter-Orientierungs-Erfassungsvorrichtung (120) zum Erfassen einer Orientierung des von der Überführungsanordnung (25) in den Übergabebereich (31) überführten Guts (11) umfasst.

9. Übergabesystem nach Anspruch 8, **gekennzeichnet durch** eine mit der Güter-Orientierungs-Erfassungsvorrichtung (120) in Signalverbindung stehende Recheneinheit (121) zum Empfangen von für die Orientierung des Guts (11) charakteristischen Güter-Orientierungsinformationen von der Güter-Orientierungs-Erfassungsvorrichtung (120).

10. Übergabesystem nach Anspruch 9, **dadurch gekennzeichnet, dass** die Recheneinheit (121) mit dem Transportwagen (32) zum Ausrichten desselben in Abhängigkeit der Güter-Orientierungsinformationen in Signalverbindung steht.

11. Übergabesystem nach einem der vorherigen Ansprüche, **gekennzeichnet durch** eine Übergabestation zum axialen Ausrichten des von der Überführungsanordnung (25) übergebenen Guts (11) nach dem Transportwagen (32).

12. Übergabesystem nach einem der vorherigen Ansprüche, **gekennzeichnet durch** mindestens ein den Übergabebereich (31) zumindest teilweise begrenzendes Schutzelement (122).

13. Gesamtanlage mit mindestens einem Übergabesystem nach einem der vorherigen Ansprüche und mit einer Wellpappeanlage (1).

14. Güter-Übergabe-Verfahren zum Übergeben eines Guts (11), insbesondere einer Materialrolle, umfassend die Schritte
- Übergeben eines Guts (11) an einen Transportwagen (32) in einem Übergabebereich (31) von einer Überführungsanordnung (25), und
- Aufnehmen des von der Überführungsanordnung (25) transportierten Guts (11) in dem Übergabebereich (31) von dem Transportwagen (32).
